# EUROPÄISCHE PATENTSCHRIFT

(11) **EP 4 363 756 B1**
(45) Veröffentlichungstag und Bekanntmachung des Hinweises auf die Patenterteilung: **18.06.2025**
(21) Anmeldenummer: 22741490.1
(22) Anmeldetag: 01.07.2022
(51) Int. Cl.: F16M 13/02

(54) **SYSTEM ZUM VERBINDEN EINES GERÄTS MIT EINER AUSSENBEREICHSVORRICHTUNG**
SYSTEM FOR CONNECTING A DEVICE TO AN OUTDOOR SYSTEM
SYSTÈME DE RACCORDEMENT D'UN DISPOSITIF À UN SYSTÈME EXTÉRIEUR

(30) Priorität: 02.07.2021 DE 102021117157
(43) Veröffentlichungstag der Anmeldung: 08.05.2024
(73) Patentinhaber: CGF Counsel Group Frankfurt AG, 60549 Frankfurt (DE)
(72) Erfinder: TREIBER, Wilhelm, 96253 Untersiemau-Ziegelsdorf (DE); EIWAN, Ulrich, 83123 Amerang (DE)
(74) Vertreter: Ter Meer Steinmeister & Partner
(86) Internationale Anmeldenummer: PCT/EP2022/068238
(87) Internationale Veröffentlichungsnummer: WO 2023/275351

(56) Entgegenhaltungen:
- CN-A- 110 572 970
- DE-A1- 102017 005 977
- JP-A- 2002 111 235
- US-A1- 2009 311 463

## Beschreibung

### TECHNISCHES GEBIET DER ERFINDUNG

Die Erfindung betrifft ein System zum Verbinden eines Geräts mit einer Außenbereichsvorrichtung. Die Außenbereichsvorrichtung kann ein Stadtmöbel oder ein Straßenmöbel sein. Insbesondere ist das Gerät ein elektronisches Gerät, beispielsweise eine Energieversorgungskomponente oder eine Netzwerkkomponente, beispielsweise ein aktives Kopplungselement in einem Netzwerk, wie Netzwerkweiche oder Netzwerkrouter.

### TECHNISCHER HINTERGRUND

Außenbereichsvorrichtungen (Stadtmöbel oder Straßenmöbel), wie Masten oder Schaltschränke, sind ein allgegenwärtiger Bestandteil der städtischen und ländlichen Landschaft. Beispielsweise kann ein Mast mit einer elektrischen Licht-Funktionseinheit, also einem Beleuchtungsmittel, entlang einer Straße oder eines Gehwegs angeordnet sein, um einem Autofahrer und/oder Fußgänger zu helfen, nachts besser zu sehen bzw. sich besser zu orientieren. Zusätzlich oder alternativ kann an einen Mast eine elektronische Informations-Funktionseinheit, wie Verkehrszeichen, Ampel, Verkehrszähler oder Mautprüfer, angeordnet sein, die zur Beobachtung und Steuerung eines Verkehrsflusses auf der Straße oder dem Gehweg eingesetzt wird. Zusätzlich oder alternativ kann an einem Mast ein Beobachtungs- oder Überwachungsgerät, wie eine Kamera oder ein Verkehrszähler, als elektrische Funktionseinheit angeordnet sein, die zur Beobachtung und Überwachung von Plätzen oder Straßen dient.

Außenbereichsvorrichtungen können für ein "Smart City" Konzept verwendet werden. "Smart City" ist dabei ein Sammelbegriff für ein gesamtheitliches Entwicklungskonzept, das darauf abzielt, eine Landschaft, insbesondere Städte, effizient, technologisch fortschrittlich, ökologisch und sozial inklusiv zu gestalten. Diese Konzepte sollen energieeffizient, emissionsarm, sicher und kostengünstig sein, um Zukunftsthemen, wie eine flächendeckende Breitbandvernetzung, eine flächendeckende E-Mobilität, eine Verkehrsbeobachtung bzw. -überwachung und/oder eine erhöhte Sicherheit zu ermöglichen. Dazu können die Außenbereichsvorrichtungen mit elektrischen Funktionseinheiten ausgestattet werden.

Die Unterbringung eines Geräts in einen Mast-Innenraum ist herausfordernd, da der verfügbare Raum in dem Mast limitiert ist. Ebenso ist ein Zugang zu dem Mast-Innenraum in der Regel lediglich über eine kleinflächige Wartungsöffnung in dem Mast möglich, wodurch beispielsweise die Installation des Geräts in dem Mast, aber auch Wartungsarbeiten an den Geräten erschwert ist.

JP 2002 111235 A betrifft eine Installationsstruktur eines Kommunikationsgeräts umfassend ein Gehäuse zur Aufnahme des Körpers des Kommunikationsgeräts; eine Kühlrippe, die von dem Gehäuse getrennt ist; einen Eingriffsstift, der an der Kühlrippe vorgesehen ist; eine Montagevorrichtung, die um die äußere Umfangsfläche der Spitze eines Pols gewickelt ist, während sie zum Festklemmen im Voraus an der Kühlrippe 2 befestigt wird; einen Griff, der von dem Gehäuse getragen wird und sich an der Vorderseite des Gehäuses befindet; eine Verbindungsvorrichtung, die an der Seite der Montagefläche des Gehäuses angeordnet ist, mit dem Griff über einen Stift verbunden ist und sich zum Gehäuse verschiebt, indem sie der Betätigung des Griffs folgt, um mit der Kühlrippe in Eingriff zu kommen, so dass sie gelöst werden kann; einen Führungsstift, der an dem Gehäuse vorgesehen ist und die Verschiebung der Verbindungsbefestigung 6 führt, wenn das Gehäuse an der Kühlrippe angebracht wird oder die Anbringung gelöst wird; und einen Ausschnitt, der an der Verbindungsbefestigung vorgesehen ist und mit einem Eingriffsstift in Eingriff steht, so dass er gelöst werden kann, wenn das Gehäuse an der Kühlrippe angebracht wird.

CN 110 572 970 A betrifft eine GPS-Positionierungsvorrichtung für einen unbemannten Traktor, die eine Schale und eine Vielzahl von integrierten Kühlrippen umfasst, die gleichmäßig auf der Oberfläche der Oberseite der Schale angeordnet sind, wobei Montagefüße symmetrisch auf den beiden Seiten der Schale angeordnet sind; eine Reinigungsleiste ist auf der Oberseite der Schale angeordnet; eine Vielzahl von integrierten Bürstenstreifen sind gleichmäßig auf der Oberfläche der Unterseite der Reinigungsleiste angeordnet; und Metallborsten sind auf den Oberflächen der beiden Seiten der Bürstenleiste angeordnet. Der Reinigungsstreifen, die Bürstenstreifen, die Metallborsten, eine seitliche Gleitbasis, eine rechteckige Gleitrille, ein rechteckiger Gleitblock, ein Verbindungsstreifen, ein gleichschenkliger trapezförmiger Klemmblock und ein Klemmloch sind angeordnet.

DE 10 2017 005977 A1 betrifft eine Kühlstruktur für eine elektronische Vorrichtung, die so ausgestaltet ist, dass sie innere Wärmeabfuhrrippen umfasst, die im Innern einer Ummantelung aufgenommen und dabei auf einer als ein Schaltungssubstrat dienenden Leiterplatte angeordnet sind, und äußere Wärmeabfuhrrippen umfasst, von denen ein Abschnitt außerhalb der Ummantelung freiliegt. Die äußeren Wärmeabfuhrrippen umfassen ein Wärmeeintragslamellenelement, das in ein erstes Wärmeabfuhrlamellenelement eingefügt ist, das die inneren Wärmeabfuhrrippen bildet, und ein zweites Wärmeabfuhrlamellenelement, das außerhalb der Ummantelung freigelegt ist. Ein Wärmeübertragungsteil, das dazu eingerichtet ist, Wärme von dem Wärmeeintragslamellenelement zu dem zweiten Wärmeabfuhrlamellenelement zu übertragen, ist zwischen dem Wärmeeintragslamellenelement und dem zweiten Wärmeabfuhrlamellenelement positioniert.

### ZUSAMMENFASSUNG DER ERFINDUNG

Der Erfindung liegt die Aufgabe zu Grunde, ein System bereitzustellen, durch das eine Installation eines Geräts an einer Außenbereichsvorrichtung erleichtert wird. Eine weitere Aufgabe liegt darin, ein System bereitzustellen, durch das eine Wartung eines Geräts in einer Außenbereichsvorrichtung erleichtert wird. Auch soll das System kostengünstig herstellbar sein.

Die Aufgabe wird gelöst durch die Merkmale des unabhängigen Anspruchs. Bevorzugte Ausführungsformen sind in den abhängigen Ansprüchen angegeben.

Das System umfasst ein Gerät, eine Halterung, zumindest ein erstes Befestigungselement und zumindest ein erstes Befestigungsmittel. Das Gerät umfasst mehrere Kühlrippen und zwischen zwei der Kühlrippen ist zumindest eine erste Nut ausgebildet. Das erste Befestigungselement ist in der ersten Nut angeordnet. Das erste Befestigungselement wirkt so mit dem ersten Befestigungsmittel zusammen, dass die Halterung mit dem Gerät verbunden ist, insbesondere so verbunden ist, dass das Gerät von der Halterung gehalten ist oder wird.

Durch eine Verbindung des Befestigungselements in der Nut des Geräts mit dem Befestigungsmittel ist die Halterung mit dem Gerät verbunden. Die Kühlrippen vergrößern die Oberfläche des Geräts, sodass ein Wärmeabtransport von dem Gerät an die Umgebung verbessert ist. Die Verbindung zwischen der Halterung und dem Gerät kann formschlüssig oder kraftschlüssig sein. Die Verbindung kann lösbar sein. Die Verbindung kann per Hand lösbar sein oder nicht per Hand lösbar sein. Die Verbindung kann ohne Hilfsmittel oder nur mithilfe eines Hilfsmittels, beispielsweise mit einem Werkzeug, beispielsweise einem Schraubenzieher, lösbar sein. Dadurch kann die Halterung an der gewünschten Position relativ zu dem Gerät befestigt werden und gegebenenfalls nachträglich verändert werden.

Das Gerät kann ein elektronisches Gerät sein. Bevorzugt ist das Gerät eine Energieversorgungskomponente oder eine Netzwerkkomponente.

Das Gerät ist beispielsweise eine aktive Netzwerkkomponente eines Netzwerkes, also ein physisches Gerät, dass für den Datenaustausch (Kommunikation und Interaktion) zwischen einer von dem Gerät entfernten Netzwerkkomponente und dem Gerät vorteilhaft ist. Das Gerät kann beispielsweise ein Gateway, ein Router, eine Netzwerkbrücke, ein Modem, ein drahtloser Zugangspunkt, eine Netzwerkweiche (Switch), ein Netzwerkverteiler (Hub) und /oder ein Repeater sein, oder umfassen. Das Gerät kann zudem eine hybride Netzwerkkomponente, wie eine Mehrschicht-Netzwerkweiche (=Multilayer-Switch), ein Protokollkonverter, ein Brückenrouter, ein Proxy-Server, eine Firewall, ein Netzwerkadressübersetzer, ein Multiplexer, ein Netzwerk-Interface-Controller sein, oder umfassen.

Bevorzugt ist das Gerät eine Netzwerkweiche. Das Netzwerk ist bevorzugt ein Metropolitan Area Network, kurz MAN. Das Netzwerk kann in einer bestimmten Bus-Topologie, beispielsweise als Stern-Bus oder als Serien-Bus (sogenanntes Daisy-Chaining), aufgebaut sein. Bei einer Daisy Chain (engl. ,Gänseblümchenkette') Topologie wird eine Anzahl von Hardware-Komponenten in Serie miteinander als Netzwerk verbunden. Dabei ist ein erstes Gerät direkt mit der entfernten Netzwerkkomponente verbunden. Weitere Geräte sind jeweils mit ihren Vorgängern (Vorgängergeräten) verbunden (Prinzip einer Reihenschaltung). So entsteht eine Kette, die sogenannte Daisy Chain. Das Signal zu und von einem Gerät wird nun über seine Vorgänger bis zur entfernten Netzwerkkomponente, beispielsweise einem Backbone oder einem Server, geleitet.

Alternativ oder zusätzlich ist das Gerät beispielsweise eine Energieversorgungskomponente. Das Gerät umfasst bevorzugt eine aktive elektrische Komponente. Eine elektrische Komponente unterscheidet sich von passiven elektrischen Komponenten durch das Vorhandensein von Elektronik.

Das Befestigungselement kann ein Nutenstein oder eine Schiebemutter sein. Allgemein sind das Befestigungselement und die Nut so ausgebildet, dass das Befestigungselement in Längsrichtung der Nut verschiebbar ist, insbesondere wenn das Befestigungselement zumindest nicht vollständig mit dem Befestigungsmittel verbunden ist. Wenn das Befestigungselement vollständig mit dem Befestigungselement verbunden ist, kann das Befestigungselement nicht in Längsrichtung der Nut verschiebbar sein. Mit anderen Worten, durch eine vollständige Verbindung des Befestigungselements mit dem Befestigungsmittel kann die Position des Befestigungselements in der Nut fixiert werden. Soll die Position des Befestigungselements in der Nut in Längsrichtung der Nut verändert werden, kann die vollständige Verbindung (zumindest ein wenig) gelöst werden und das Befestigungselement an die gewünschte Position in Längsrichtung der Nut verschoben werden.

Die Längsrichtung der Nut kann die Richtung der größten Erstreckung der Nut sein.

Das Befestigungselement und die Nut können so ausgebildet sein, dass eine Bewegung des Befestigungselements in Richtung der Öffnung der Nut (senkrecht zur Längsrichtung der Nut) verhindert ist oder nicht möglich ist. Diese Bewegung kann sowohl dann verhindert oder nicht möglich sein, wenn das Befestigungselement vollständig mit dem Befestigungsmittel verbunden ist als auch wenn das Befestigungselement nicht vollständig mit dem Befestigungsmittel verbunden ist.

Beispielsweise kann das Befestigungselement ein Innengewinde aufweisen, insbesondere ein durchgängiges Innengewinde. Das Befestigungsmittel kann ein Außengewinde aufweisen. Das Außengewinde kann in das Innengewinde eingebracht werden, sodass das Befestigungselement und das Befestigungsmittel zusammenwirken. Wird das Außengewinde so weit in das Innengewinde eingebracht, dass ein Abschnitt des Außengewindes aus dem Innengewinde hinausragt (aus der Öffnung des Innengewindes, die der Öffnung gegenüberliegt, in die das Außengewinde eingebracht wurde), kann das Befestigungsmittel an einer Position in der Nut fixiert sein, insbesondere durch einen Kraftschluss zwischen dem Befestigungselement und einer Wand der Nut und/oder durch einen Kraftschluss zwischen dem Befestigungsmittel und einer Wand der Nut.

Das Befestigungsmittel kann eine Schraube oder ein Bolzen sein. Das Befestigungsmittel kann ein Außengewinde aufweisen.

Das Befestigungsmittel kann lösbar mit dem Befestigungselement verbindbar sein.

Die Nut kann in Form einer Nutenschiene, bevorzugt in Form einer T-Nutenschiene, ausgebildet sein. Die Nut kann eine Öffnung aufweisen, durch die die Nut mit der Umgebung der Nut (fluidkommunizierend) verbunden sein kann. In einem Querschnitt (senkrecht zur Längsrichtung der Nut) kann die Öffnung eine geringere Breite aufweisen als ein von der Öffnung beanstandeter Abschnitt der Nut. Die geringste Breite der Nut kann bei der Öffnung der Nut vorliegen.

Die Nut kann einen Nutenboden aufweisen. Der Nutenboden kann durch eine Gehäusewand gebildet sein, in der oder von der die Nut gebildet ist. Die Nut kann so ausgestaltet sein, dass die Nut nicht den Innenraum des Geräts mit der Umgebung der Nut (fluidkommunizierend) verbindet.

Ein erstes Ende der Nut (in Längsrichtung der Nut) kann verschlossen sein. Ein zweites Ende der Nut (in Längsrichtung der Nut) kann verschlossen sein. Dadurch kann das Befestigungselement in der Nut in Längsrichtung zwischen dem ersten verschlossenen Ende der Nut und dem zweiten verschlossenen Ende der Nut verschiebbar sein. Die verschlossenen Enden der Nut können als Anschlag für das Befestigungselement dienen. Das Befestigungselement kann in die Nut eingebracht werden, bevor beide Enden der Nut verschlossen werden.

Die Halterung kann eine Bügelhalterung sein. Die Halterung kann mit einer Außenbereichsvorrichtung verbunden werden. Dadurch kann das Gerät mit der Außenbereichsvorrichtung verbunden werden.

Beispielsweise kann die Halterung mit der Außenbereichsvorrichtung verbunden sein und (anschließend) das Gerät kann mit der Halterung verbunden werden. Ebenso kann die Halterung mit dem Gerät verbunden sein und (anschließend) die Halterung mit der Außenbereichsvorrichtung verbunden werden.

Eine Außenbereichsvorrichtung ist bevorzugt eine Vorrichtung, die in einem Außenbereich, wie einem öffentlichen oder privaten Platz einer Stadt oder einer ländlichen Gegend stationär installiert ist. In dem Außenbereich ist diese Außenbereichsvorrichtungen Umwelteinflüssen, wie Wetter, Vandalismus und/oder Unfallszenarien ausgesetzt.

Beispielsweise ist eine Außenbereichsvorrichtung ein Straßenmöbel (auch Stadtmöbel genannt). Ein Straßenmöbel ist ein Oberbegriff für Gegenstände in einem Außenbereich, einem öffentlichen und privaten Raum, auf einem Platz oder in einer Parkanlage. Ein Straßenmöbel bietet eine im öffentlichen Raum benötigte Funktion an oder dient der Information oder Werbung. Beispielsweise zählen Beleuchtungskörper, Lichtzeichenanlagen oder Verkehrszeichen zu Stadtmöbeln.

Beispielsweise ist eine Außenbereichsvorrichtung ein Hydrant, ein Telefonverteilkasten, ein Stromversorgungskasten, eine Litfaßsäule, ein Schaltschrank oder eine Taxi-Säule.

Bevorzugt ist eine Außenbereichsvorrichtung ein pfeilerartiger Hohlkörper, insbesondere ein Mast. Ein Mast ist hierbei ein Bauwerk mit zumindest einem hohlen pfeiler- bzw. pfostenähnlichen Innenbereich. Die Grundfläche eines Mastes ist im Vergleich zu seiner Höhe vergleichsweise gering. Der Mast dient vorrangig zur Befestigung von elektrischen Funktionseinheiten, wie beispielsweise von Beleuchtungsmitteln (Lichtmast für Straßenbeleuchtung, Flutlicht, Wegelicht, Leuchtreklame) und/oder Einheiten zur Überwachung und/oder Leitung eines Verkehrs (Wegweiser, Lichtsignalanlagen, Lichtzeichenanlagen, Verkehrsbeschilderung, Mautbrücken, Verkehrszähler) und/oder anderer elektrischer Komponenten, wie beispielsweise Antennen und/oder Ladestationen.

Die Außenbereichsvorrichtung kann einen Hohlraum aufweisen. Der Hohlraum kann sich über das gesamte Innenvolumen der Außenbereichsvorrichtung erstrecken. Die Außenbereichsvorrichtung kann ein Hohlkörper, beispielsweise in Form eines Hohlzylinders oder eines Hohlkonus oder eines Hohlkegelstumpfes, sein. Alternativ umfasst nur ein Abschnitt der Außenbereichsvorrichtung einen Hohlraum, wodurch der übrige Teil des Außenbereichsvorrichtung als massiver und stabiler Teil verbleibt, so wie es etwa bei einem massiven Pfeiler der Fall ist.

Der Hohlraum kann im Querschnitt rund, oval, dreieckig, viereckig oder mehreckig sein.

Das Gerät umfasst mehrere Kühlrippen (=Rippen). Die Nut ist zwischen zwei der Kühlrippen ausgebildet. Beispielsweise kann eine erste Rippe einen Abschnitt umfassen, der sich in Richtung der Öffnung der Nut in Richtung der Mitte der Nut erstreckt. Eine zweite Rippe kann einen Abschnitt umfassen, der sich in Richtung der Öffnung der Nut in Richtung der Mitte der Nut erstreckt. Dadurch kann die Öffnung der Nut gegenüber einem anderen Abschnitt der Nut verengt sein. Ein Befestigungselement in der Nut kann durch die verengte Öffnung daran gehindert sein aus der Öffnung der Nut in die Umgebung der Nut zu gelangen oder daran gehindert sein aus der Öffnung der Nut entnommen zu werden.

Allgemein kann das Gerät ein Gehäuse umfassen. In dem Gehäuse kann eine aktive elektrische Komponente angeordnet sein.

Das Gehäuse kann ein Metall umfassen oder aus dem Metall bestehen. Bevorzugt umfasst das Gehäuse Aluminium oder es besteht aus Aluminium.

Das Gehäuse kann eine erste Gehäusewand aufweisen. Die zwei Kühlrippen, und dadurch die erste Nut, können von der ersten Gehäusewand ausgebildet sein. Die erste Gehäusewand kann so ausgebildet sein oder die Oberfläche der ersten Gehäusewand kann so ausgebildet sein, dass die zwei Kühlrippen von der ersten Gehäusewand ausgebildet ist.

Das Gehäuse kann eine im Wesentlichen rechteckige, dreieckige, kreisförmige oder ovale Grundform aufweisen. Bevorzugt ist die Grundform rechteckig.

Das Gehäuse kann eine erste Gehäusewand, eine zweite Gehäusewand, eine dritte Gehäusewand und eine vierte Gehäusewand aufweisen. Die erste Gehäusewand, die zweite Gehäusewand, die dritte Gehäusewand und die vierte Gehäusewand können einstückig oder monolithisch ausgebildet sein. Alternativ können die erste Gehäusewand, die zweite Gehäusewand, die dritte Gehäusewand und die vierte Gehäusewand mehrteilig ausgestaltet sein. Dabei kann jede der ersten, zweiten, dritten und vierten Gehäusewand einstückig oder monolithisch ausgebildet sein und die erste, zweite, dritte und vierte Gehäusewand können (mechanisch) miteinander verbunden werden, beispielsweise durch eine Verschraubung.

In dem Gerät, insbesondere das Gehäuse des Geräts, können zumindest zwei, bevorzugt zumindest drei, bevorzugter zumindest vier Nuten gebildet sein. Jede der Nuten kann jede hierin offenbarte Nut sein.

Das Gehäuse des Geräts kann einen ersten Gehäusedeckel umfassen. Das Gehäuse des Geräts kann optional einen zweiten Gehäusedeckel umfassen. Der erste Gehäusedeckel kann einen ersten Anschluss umfassen. Der zweite Gehäusedeckel kann einen zweiten Anschluss umfassen.

Die Nut kann sich (vollständig) zwischen dem ersten Gehäusedeckel und dem zweiten Gehäusedeckel erstrecken. Die Richtung der Erstreckung der Nut zwischen dem ersten Gehäusedeckel und dem zweiten Gehäusedeckel kann als Längsrichtung der Nut verstanden werden.

Der erste Anschluss des ersten Gehäusedeckels kann eine Öffnung umfassen oder eine Öffnung sein. Durch die Öffnung kann ein Innenraum des Gehäuses (fluidkommunizierend) mit der Umgebung des Gehäusedeckels verbunden sein.

Der erste Gehäusedeckel kann zwei Anschlüsse, bevorzugt drei Anschlüsse, besonders bevorzugt vier Anschlüsse, umfassen. Höchstens zwei der Anschlüsse können fluchtend an dem ersten Gehäusedeckel angeordnet sein. Mit anderen Worten, die Mittelpunkte von höchstens zwei der Anschlüsse können auf einer (gedachten) Gerade liegen.

Jeder der Anschlüsse kann ein optischer oder elektrischer Anschluss sein. Beispielsweise kann ein optischer Anschluss eine Aufnahme, insbesondere eine Steckeraufnahme, für ein Glasfaserkabel sein. Über den optischen Anschluss kann ein optisches Signal in das Gerät eingebracht werden. Ein elektrischer Anschluss kann eine Aufnahme, insbesondere eine Steckeraufnahme, für ein Datenkabel oder ein Stromkabel sein. Über den elektrischen Anschluss kann ein Datensignal oder ein elektrischer Strom in das Gerät eingebracht werden.

Der erste Gehäusedeckel kann ein erstes Ende, insbesondere ein oberes Ende, des Gehäuses abschließen. Der zweite Gehäusedeckel kann ein zweites Ende, insbesondere ein unteres Ende, des Gehäuses abschließen.

Das System kann zumindest ein zweites Befestigungselement umfassen. Das System kann zumindest ein zweites Befestigungsmittel umfassen. Das erste Befestigungsmittel kann so mit dem ersten Befestigungselement zusammenwirken und das zweite Befestigungsmittel so mit dem zweiten Befestigungselement zusammenwirken, dass die Halterung mit dem Gerät verbunden ist. Dadurch kann die Halterung an zwei Stellen oder Punkten mit dem Gerät verbunden sein.

Das erste Befestigungsmittel kann mit dem ersten Befestigungselement verbunden sein. Das zweite Befestigungsmittel kann mit dem zweiten Befestigungselement verbunden sein.

Das Gerät kann zumindest eine zweite Nut aufweisen. Das zweite Befestigungselement kann in der zweiten Nut angeordnet sein. Die zweite Nut kann zwischen zwei Kühlrippen ausgebildet sein. Die zwei Kühlrippen, durch die die zweite Nut ausgebildet sein kann, können verschiedene Kühlrippen sein als die zwei Kühlrippen, durch die die erste Nut ausgebildet ist. Eine der Kühlrippen, durch die die zweite Nut ausgebildet ist, kann eine der Kühlrippen sein, durch die die erste Nut ausgebildet ist.

Die erste Nut und die zweite Nut können von oder in unterschiedlichen Gehäusewänden ausgebildet sein. Bevorzugt sind die Kühlrippen, durch die die erste Nut ausgebildet ist, und die Kühlrippen, durch die die zweite Nut ausgebildet ist, von oder in unterschiedlichen Gehäusewänden ausgebildet. Die unterschiedlichen Gehäusewände können gegenüberliegende Gehäusewände sein. Die unterschiedlichen Gehäusewände können nicht benachbart sein. Die unterschiedlichen Gehäusewände können durch eine weitere Gehäusewand beabstandet sein.

Das erste Befestigungselement und das zweite Befestigungselement können (beide) in der ersten Nut angeordnet sein.

Das System kann ein drittes und ein viertes Befestigungselement umfassen. Zusätzlich kann das System ein drittes und ein viertes Befestigungsmittel umfassen.

Beispielsweise können das erste und das zweite Befestigungselement in der ersten Nut angeordnet sein. Das dritte und das vierte Befestigungselement können in der zweiten Nut angeordnet sein. Ein erstes Befestigungsmittel kann mit dem ersten Befestigungselement, ein zweites Befestigungsmittel kann mit dem zweiten Befestigungselement, ein drittes Befestigungsmittel kann mit dem dritten Befestigungselement und ein viertes Befestigungsmittel kann mit dem vierten Befestigungselement (jeweils) so zusammenwirken, dass die Halterung mit dem Gerät verbunden ist.

Alternativ können das erste, zweite, dritte und vierte Befestigungselement (alle) in der ersten Nut angeordnet sein. Auch in diesem Fall kann ein erstes Befestigungsmittel mit dem ersten Befestigungselement, ein zweites Befestigungsmittel mit dem zweiten Befestigungselement, ein drittes Befestigungsmittel mit dem dritten Befestigungselement und ein viertes Befestigungsmittel mit dem vierten Befestigungselement (jeweils) so zusammenwirken, dass die Halterung mit dem Gerät verbunden ist.

Ebenso kann das System genau ein Befestigungselement (maximal ein Befestigungselement) und genau ein Befestigungsmittel (maximal ein Befestigungsmittel) umfassen. Das erste Befestigungsmittel kann so mit dem ersten Befestigungselement zusammenwirken, dass die Halterung mit dem Gerät verbunden ist.

Jedes der Befestigungselemente kann jedes hierin offenbarte Befestigungselement sein. Jedes der Befestigungsmittel kann jedes hierin offenbarte Befestigungsmittel sein.

Die Halterung kann eine erste Halterung und eine zweite Halterung umfassen. Ein erstes Befestigungsmittel kann so mit einem ersten Befestigungselement zusammenwirken, dass die erste Halterung mit dem Gerät verbunden ist. Ein zweites Befestigungsmittel kann so mit einem zweiten Befestigungselement zusammenwirken, dass die zweite Halterung mit dem Gerät verbunden ist.

Beispielsweise kann das System eine erste Halterung, eine zweite Halterung, ein erstes Befestigungsmittel, ein zweites Befestigungsmittel, ein erstes Befestigungselement, ein zweites Befestigungselement, eine erste Nut zwischen zwei Kühlrippen und eine zweite Nut zwischen zwei Kühlrippen umfassen. Das erste Befestigungsmittel, das erste Befestigungselement und die erste Halterung können miteinander verbunden sein, sodass die erste Halterung mit dem Gerät verbunden ist. Das zweite Befestigungsmittel, das zweite Befestigungselement und die zweite Halterung können miteinander verbunden sein, sodass die zweite Halterung mit dem Gerät verbunden ist. Das erste Befestigungselement kann in der ersten Nut angeordnet sein und das zweite Befestigungselement kann in der zweiten Nut angeordnet sein. Die erste und zweite Nut können von oder in unterschiedlichen Gehäusewänden des Geräts ausgebildet sein. Die unterschiedlichen Gehäusewände können sich gegenüberliegen.

Das System kann ebenso eine erste Halterung, eine zweite Halterung, ein erstes Befestigungsmittel, ein zweites Befestigungsmittel, ein drittes Befestigungsmittel, ein viertes Befestigungsmittel, ein erstes Befestigungselement, ein zweites Befestigungselement, ein drittes Befestigungselement, ein viertes Befestigungselement, eine erste Nut zwischen zwei Kühlrippen und eine zweite Nut zwischen zwei Kühlrippen umfassen. Das erste Befestigungsmittel, das erste Befestigungselement und die erste Halterung können miteinander verbunden sein, und das zweite Befestigungsmittel, das zweite Befestigungselement und die erste Halterung können miteinander verbunden sein, sodass die erste Halterung mit dem Gerät verbunden ist. Das dritte Befestigungsmittel, das dritte Befestigungselement und die zweite Halterung können miteinander verbunden sein, und das vierte Befestigungsmittel, das vierte Befestigungselement und die zweite Halterung können miteinander verbunden sein, sodass die zweite Halterung mit dem Gerät verbunden ist. Das erste Befestigungselement und das dritte Befestigungselement können in der ersten Nut angeordnet sein, und das zweite Befestigungselement und das vierte Befestigungselement können in der zweiten Nut angeordnet sein. Die erste und zweite Nut können von oder in unterschiedlichen Gehäusewänden des Geräts ausgebildet sein. Die unterschiedlichen Gehäusewände können sich gegenüberliegen.

Die Halterung kann zumindest ein Halteelement umfassen. Durch das Halteelement kann die Halterung, und insbesondere das Gerät, mit einer Außenbereichsvorrichtung, beispielsweise mit einer oben beschriebenen Außenbereichsvorrichtung verbunden werden.

Die Halterung kann ein erste Halteelement und ein zweites Halteelement umfassen. Insbesondere kann eine erste Halterung ein erstes Halteelement umfassen und eine zweite Halterung kann ein zweites Halteelement umfassen.

Das Halteelement kann ein Magnet, eine Schienenklammer, eine Schraube, ein Bolzen, ein Rastelement, ein Klemmelement, ein Klettelement und/oder ein Klebeelement sein. Insbesondere ist das Halteelement ein Permanentmagnet oder einen Hutschienenklammer. Die Außenbereichsvorrichtung kann ebenso ein Halteelement umfassen. Das Halteelement der Außenbereichsvorrichtung kann auf das Halteelement des Geräts so abgestimmt sein, dass diese zusammenwirken und die Halterung (fest) mit der Außenbereichsvorrichtung verbindet.

Beispielsweise kann die Außenbereichsvorrichtung eine Hutschiene umfassen, die mit einer Hutschienenklammer des Geräts zusammenwirken kann oder zusammenwirkt.

Die Halterung, insbesondere das Halteelement der Halterung, kann direkt mit einer Wand oder einer Oberfläche der Außenbereichsvorrichtung verbunden sein. Beispielsweise kann das Halteelement ein Magnet sein und die Außenbereichsvorrichtung kann eine magnetische Wand oder Oberfläche aufweisen. Der Magnet als Halteelement kann direkt mit der Wand oder der Oberfläche der Außenbereichsvorrichtung verbunden werden. Insbesondere, wenn eine Wand oder Oberfläche der Außenbereichsvorrichtung nicht magnetisch ist, kann das Halteelement als Klebeelement direkt auf die Wand oder Oberfläche der Außenbereichsvorrichtung geklebt werden. Ebenso kann eine Wand oder Oberfläche der Außenbereichsvorrichtung mit einem Klettelement versehen sein, das mit dem Halteelement als Klettelement zusammenwirkt.

Die Wand kann eine Innenwand oder eine Außenwand der Außenbereichsvorrichtung sein. Die Oberfläche kann eine Innenoberfläche oder eine Außenoberfläche der Außenbereichsvorrichtung sein. Bevorzugt befindet sich die Halterung zumindest abschnittsweise, insbesondere vollständig, außerhalb der Außenbereichsvorrichtung, wenn diese direkt mit einer Außenwand oder einer Außenoberfläche der Außenbereichsvorrichtung verbunden ist. Wenn die Halterung direkt mit einer Innenwand oder einer Innenoberfläche der Außenbereichsvorrichtung verbunden ist, kann sich die Halterung zumindest abschnittsweise, insbesondere vollständig, innerhalb der Außenbereichsvorrichtung befinden.

Die Halterung kann eine Aussparung aufweisen. Das Befestigungsmittel kann in der Aussparung gelagert sein. Bevorzugt weist die Halterung eine erste Aussparung und eine zweite Aussparung auf. Ein erstes Befestigungsmittel kann in der ersten Aussparung gelagert sein und ein zweites Befestigungsmittel kann in der zweiten Aussparung gelagert sein.

Das Befestigungsmittel kann mit dem Befestigungselement verbunden sein. Die Halterung kann mit einer Außenbereichsvorrichtung verbindbar sein oder verbunden sein. Das Gerät kann dann so in die Halterung eingehängt werden, dass das Befestigungsmittel in der Aussparung liegt, sodass das Gerät mit der Halterung verbunden ist.

Die Aussparung kann einseitig geöffnet sein. Durch die einseitige Öffnung kann das Befestigungsmittel in die Aussparung der Halterung einfach von einem Nutzer eingebracht werden, um das Gerät mit der Halterung zu verbinden. Beispielsweise für eine Wartung kann das Gerät einfach aus der Halterung entfernt werden.

Die Halterung kann einen ersten Abschnitt und einen zweiten Abschnitt umfassen. Der erste Abschnitt kann sich im Wesentlichen (±10 % oder ±5 %) parallel zu einer Seite des Geräts erstrecken. Alternativ oder zusätzlich kann sich der erste Abschnitt im Wesentlichen (±10 % oder ±5 %) parallel zu der Achse des Geräts erstrecken. Der zweite Abschnitt kann relativ zu dem ersten Abschnitt abgewinkelt sein und sich von dem Gerät wegweisend erstrecken. Bevorzugt erstreckt sich der erste Abschnitt im Wesentlichen (±10 % oder ±5 %) parallel zu einer Gehäusewand des Gehäuses des Geräts, insbesondere zu der Gehäusewand des Gehäuses des Geräts, von der oder in der die Nut ausgebildet ist, in der das Befestigungselement angeordnet ist.

Zwischen dem ersten Gehäusedeckel und dem zweiten Gehäusedeckel des Geräts kann eine Achse des Geräts orientiert sein. Insbesondere ist die Achse des Geräts zwischen einem Mittelpunkt des ersten Gehäusedeckels und einem Mittelpunkt des zweiten Gehäusedeckels orientiert. Die Halterung kann sich in Richtung der Achse des Geräts über den ersten Gehäusedeckel und/oder den zweiten Gehäusedeckel hinaus erstrecken. Mit anderen Worten, ein Abschnitt der Halterung kann axial (in Richtung der Achse des Geräts) über das Gerät hinausragen.

Die Halterung kann einen ersten Abschnitt, einen zweiten Abschnitt und einen dritten Abschnitt umfassen. Der erste Abschnitt kann sich im Wesentlichen (±10 % oder ±5 %) parallel zur Achse des Geräts erstrecken. Alternativ oder zusätzlich kann sich der erste Abschnitt im Wesentlichen (±10 % oder ±5 %) parallel zu einer Seite des Geräts oder zu einer Gehäusewand des Geräts erstrecken. Der zweite Abschnitt kann gegenüber dem ersten Abschnitt abgewinkelt sein. Der dritte Abschnitt kann sich im Wesentlichen (±10 % oder ±5 %) parallel zur Achse des Geräts erstrecken. Alternativ oder zusätzlich kann sich der dritte Abschnitt im Wesentlichen (±10 % oder ±5 %) parallel zu einer Seite des Geräts oder zu einer Gehäusewand des Geräts erstrecken. Bevorzugt ist der zweite Abschnitt so abgewinkelt, dass sich der zweite Abschnitt in Richtung des Geräts, beispielsweise in Richtung der Achse des Geräts, erstreckt. Dadurch kann das Gerät besonders platzsparend in einer Außenbereichsvorrichtung angebracht werden.

Das System kann eine Außenbereichsvorrichtung umfassen. Die Halterung kann mit der Außenbereichsvorrichtung verbunden sein. Bevorzugt ist die Halterung lösbar mit der Außenbereichsvorrichtung verbunden. Alternativ oder zusätzlich kann die Halterung fest mit der Außenbereichsvorrichtung verbunden sein.

### KURZE BESCHREIBUNG DER FIGUREN

Nachfolgend wird anhand von Figuren die Erfindung bzw. weitere Ausführungsformen und Vorteile der Erfindung näher erläutert, wobei die Figuren lediglich Ausführungsbeispiele der Erfindung beschreiben. Gleiche Bestandteile in den Figuren werden mit gleichen Bezugszeichen versehen.
- Fig. 1: zeigt ein Gerät 100;
- Fig. 2: zeigt schematisch einen Abschnitt einer ersten Gehäusewand 141 des Geräts 100 in einer Schnittansicht;
- Fig. 3: zeigt schematisch einen Abschnitt einer ersten Gehäusewand 143 des Geräts 100 in einer Schnittansicht;
- Fig. 4: zeigt ein Befestigungselement 160a;
- Fig. 5: zeigt eine Außenbereichsvorrichtung 800 mit einem Gerät 100;
- Fig. 6: zeigt ein System 1000 in einer Draufsicht;
- Fig. 7: zeigt das System 1000 in einer Seitenansicht;
- Fig. 8: zeigt ein System 1000 in einer Draufsicht;
- Fig. 9: zeigt das System 1000 in einer Seitenansicht;
- Fig. 10: zeigt ein System 1000 in einer Draufsicht;
- Fig. 11: zeigt das System 1000 in einer Seitenansicht;
- Fig. 12: zeigt ein System 1000 in einer Draufsicht;
- Fig. 13: zeigt das System 1000 in einer Seitenansicht;
- Fig. 14: zeigt ein System 1000 in einer Draufsicht;
- Fig. 15: zeigt das System 1000 in einer Seitenansicht;
- Fig. 16: zeigt ein System 1000 in einer Draufsicht; und
- Fig. 17: zeigt das System 1000 in einer Seitenansicht.

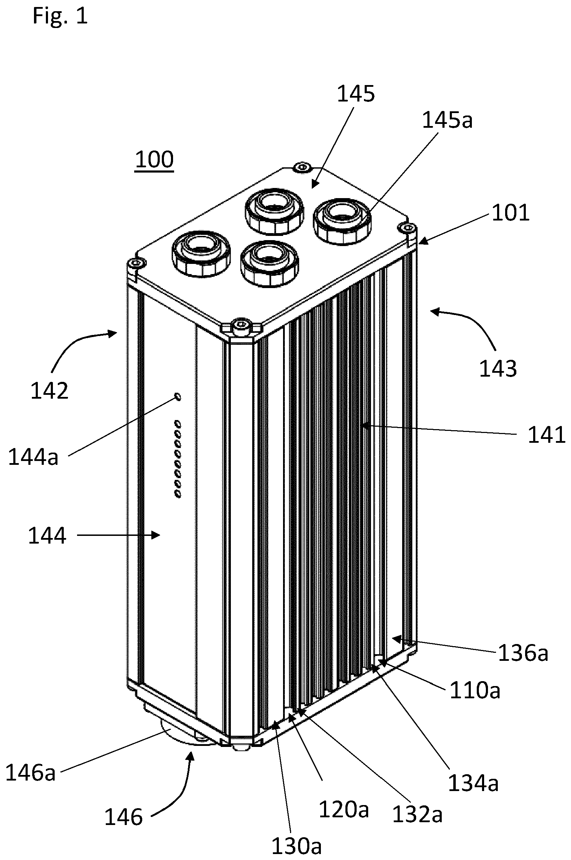

Fig. 1 zeigt ein Gerät 100 in einer perspektivischen Seitenansicht. Das Gerät 100 kann ein Gehäuse 101 umfassen. Das Gehäuse 101 kann eine erste Gehäusewand 141, eine zweite Gehäusewand 142 (nicht in Fig. 1 sichtbar), eine dritte Gehäusewand 143 (nicht in Fig. 1 sichtbar) und eine vierte Gehäusewand 144 umfassen. Nicht alle Gehäusewände sind notwendig, sondern ein Teil der Gehäusewände kann ausreichend sein.

Die erste Gehäusewand 141 umfasst mehrere Kühlrippen. Zwischen einer ersten Kühlrippe 134a und einer zweiten Kühlrippe 136a ist eine erste Nut 110a gebildet. Je eine Seitenwand der ersten Kühlrippe 134a und der zweiten Kühlrippe 136a kann eine Begrenzung der ersten Nut 110a bilden.

Die erste Nut 110a ist gegenüber der Umgebung des Geräts 100 geöffnet. Mit anderen Worten, zwischen der ersten Nut 110a und der Umgebung des Geräts 100 kann eine Fluidkommunikation erfolgen.

In der ersten Nut 110a ist ein erstes Befestigungselement 160a angeordnet, das später näher beschrieben wird.

In dem Beispiel der Fig. 1 ist weiterhin eine zweite Nut 120a in der ersten Gehäusewand 141 ausgebildet. Zwischen einer dritten Kühlrippe 130a und eine vierten Kühlrippe 132a kann die zweite Nut 120a ausgebildet sein. Eine Seitenwand der dritten Kühlrippe 130a und eine Seitenwand der vierten Kühlrippe 132a kann die zweite Nut 120a begrenzen.

Die zweite Nut 120a ist gegenüber der Umgebung des Geräts 100 geöffnet. Zwischen der zweiten Nut 120a und der Umgebung des Geräts 100 kann eine Fluidkommunikation erfolgen.

In der zweiten Nut 120a kann ein Befestigungselement angeordnet sein.

Bevorzugt ist die erste Gehäusewand 141 vollständig mit Kühlrippen versehen bzw. in der gesamten ersten Gehäusewand 141 können Kühlrippen ausgebildet sein.

Die Fläche der ersten Gehäusewand 141 kann größer sein als die Fläche der dritten Gehäusewand 143. Alternativ oder zusätzlich kann die Fläche der ersten Gehäusewand 141 größer sein als die Fläche der vierten Gehäusewand 144.

Die zweite Gehäusewand 142 kann analog oder gleich zu der ersten Gehäusewand 141 ausgestaltet sein. Insbesondere kann die zweite Gehäusewand 142 mehrere Kühlrippen umfassen. Zwischen zwei der Kühlrippen kann eine Nut ausgebildet sein, die gleich ist zu der ersten Nut 110a der ersten Gehäusewand. Weiterhin kann zwischen zwei (weiteren) Kühlrippen eine weitere Nut ausgebildet sein, die gleich sein kann zu der zweiten Nut 120a der ersten Gehäusewand 141.

Die erste Gehäusewand 141 kann der zweiten Gehäusewand 142 gegenüberliegen.

Bevorzugt umfasst die dritte Gehäusewand 143 keine Kühlrippen. Es ist jedoch möglich, dass die dritte Gehäusewand 143 Kühlrippen umfasst. Die dritte Gehäusewand 143 kann die erste Gehäusewand 141 und die zweite Gehäusewand 142 verbinden.

Die vierte Gehäusewand 144 umfasst bevorzugt keine Kühlrippen. Jedoch kann auch die vierte Gehäusewand 144 Kühlrippen umfassen. Die vierte Gehäusewand 144 kann die erste Gehäusewand 141 und die zweite Gehäusewand 142 verbinden. Die vierte Gehäusewand 144 kann der dritten Gehäusewand 143 gegenüberliegen.

Die vierte Gehäusewand 144 kann eine Anzeige 144a umfassen. Die Anzeige 144a kann eine oder mehrere LEDs, eine oder mehrere Leuchten oder Lampen, ein oder mehrere Displays, insbesondere Touch-Displays, oder einen oder mehrere Schalter umfassen. Durch die Anzeige 144a kann einem Nutzer eine Information über den Zustand des Geräts 100 vermittelt werden. Beispielsweise wird einem Nutzer durch ein Aufleuchten einer LED signalisiert, dass das Gerät 100 betriebsbereit oder in Betrieb ist. Durch ein Aufleuchten einer anderen LED oder durch ein Aufleuchten der gleichen LED in einer anderen Farbe kann dem Nutzer signalisiert werden, dass das Gerät 100 nicht betriebsbereit oder nicht in Betrieb ist, weil beispielsweise eine Fehlfunktion oder eine Störung vorliegt.

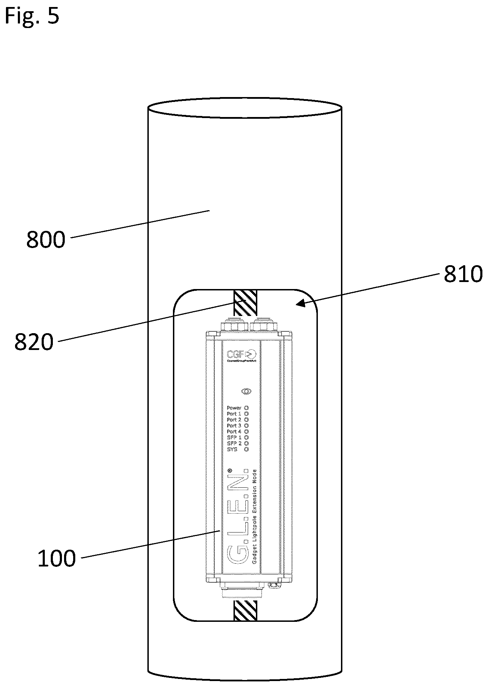

Ist das Gerät 100 mit einer Außenbereichsvorrichtung 800 (sh. Fig. 5) verbunden, kann die vierte Gehäusewand 144 die dem Nutzer oder der Öffnung der Außenbereichsvorrichtung 800 zugewandte Seite des Geräts 100 sein. Blickt der Nutzer durch die Öffnung der Außenbereichsvorrichtung 800, kann die vierte Gehäusewand 144 die Seite des Geräts 100 sein, die dem Nutzer zugewandt ist.

Die dritte Gehäusewand 143 kann dem Nutzer oder der Öffnung der Außenbereichsvorrichtung 800 abgewandt sein, wenn das Gerät 100 mit einer Außenbereichsvorrichtung 800 verbunden ist.

Die erste Gehäusewand 141 und/oder die zweite Gehäusewand 142 können Seitenwände des Geräts 100 sein.

Die erste Gehäusewand 141, die zweite Gehäusewand 142, die dritte Gehäusewand 143 und die vierte Gehäusewand 143 können einstückig oder monolithisch miteinander ausgebildet sein. Alternativ kann einige der ersten, zweiten, dritten und vierten Gehäusewände 141, 142, 143, 144 oder alle der ersten, zweiten, dritten und vierten Gehäusewände 141, 142, 143, 144 als einzelne Bauteile ausgebildet sein, die miteinander verbunden sind. Die Verbindung kann beispielsweise durch eine Verschraubung oder durch eine Klemmung erfolgen.

Das Gehäuse 101 des Geräts 100 kann einen ersten Gehäusedeckel 145 umfassen, der auch als oberer Gehäusedeckel bezeichnet sein kann. Der erste Gehäusedeckel 145 kann mit der ersten Gehäusewand 141, der zweiten Gehäusewand 142, der dritten Gehäusewand 143 und der vierten Gehäusewand 144 verbunden sein.

Bevorzugt kann ein Abschnitt des ersten Gehäusedeckels 145 die erste Nut 110a in Längsrichtung der ersten Nut 110a begrenzen. Alternativ kann die erste Gehäusewand 141 einen Anschlag umfassen, durch den die erste Nut 110a in Längsrichtung der ersten Nut 110a begrenzt ist. Dier erste Gehäusewand 141 kann zwei Anschläge umfassen, durch die die erste Nut 110a in Längsrichtung der ersten Nut 110a beidseitig (an beiden Enden in Längsrichtung) begrenzt ist. Die erste Nut 110a kann auch höchstens abschnittsweise in der ersten Gehäusewand 141 des Gehäuses 101 ausgebildet sein. Mit anderen Worten, die erste Nut 110a kann sich höchstens teilweise in der ersten Gehäusewand 141 (in Längsrichtung der ersten Nut 110a) erstrecken.

Analog kann ein Abschnitt des ersten Gehäusedeckels 145 die zweite Nut 120a in Längsrichtung der zweiten Nut 120a begrenzen. Die erste Gehäusewand 141 kann ebenso einen Anschlag umfassen, durch den die zweite Nut 120a in Längsrichtung der zweiten Nut 120a begrenzt ist. Dier erste Gehäusewand 141 kann zwei Anschläge umfassen, durch die die zweite Nut 120a in Längsrichtung der zweiten Nut 120a beidseitig (an beiden Enden in Längsrichtung) begrenzt ist. Die zweite Nut 120a kann auch höchstens abschnittsweise in der ersten Gehäusewand 141 des Gehäuses 101 ausgebildet sein. Die zweite Nut 120a kann sich höchstens teilweise in der ersten Gehäusewand 141 (in Längsrichtung der ersten Nut 110a) erstrecken.

Die Längsrichtung einer Nut kann die Richtung der längsten Erstreckung der Nut sein.

Der erste Gehäusedeckel 145 kann einen Anschluss 145a umfassen. Bevorzugt umfasst der erste Gehäusedeckel 145 zumindest zwei, bevorzugt zumindest drei, bevorzugter zumindest vier, Anschlüsse 145a. Durch den Anschluss 145a kann das Gerät 100 mit der Umgebung verbunden sein. Beispielsweise kann ein Stecker eines Kabels von dem Anschluss 145a aufgenommen werden oder in den Anschluss 145a eingesteckt werden. Dadurch kann eine Datenverbindung zwischen dem Gerät 100 und einem anderen Gerät, beispielsweise mit einem Server, hergestellt werden. Der Anschluss 145a kann eingerichtet sein, elektrische Energie zur Energieversorgung des Geräts 100, ein elektrisches Signal, ein Datensignal und/oder ein optisches Signal zu empfangen und/oder zu senden, oder in das Gerät 100 einzuleiten.

Der Anschluss 145a kann eine Öffnung umfassen, durch die ein Innenraum des Geräts 100 mit der Umgebung des Geräts in Fluidkommunikation steht. Der Anschluss 145a kann verschlossen sein, sodass (über den Anschluss 145a) keine Fluidkommunikation zwischen dem Innenraum des Geräts 100 und der Umgebung des Geräts 100 erfolgen kann.

Insbesondere umfasst der erste Gehäusedeckel vier Anschlüsse 145a. Die vier Anschlüsse können teilweise versetzt angeordnet sein. Bevorzugt sind höchstens zwei der Anschlüsse 145a zueinander fluchtend angeordnet. Jeweils zwei der Anschlüsse können zueinander fluchtend angeordnet sein. Dabei kann "fluchtend" in einer von dem ersten Gehäusedeckel 145 definierten Ebene betrachtet werden.

Das Gehäuse 101 des Geräts 100 kann einen zweiten Gehäusedeckel 146 umfassen. Der zweite Gehäusedeckel 146 kann auch als unterer Gehäusedeckel bezeichnet sein. Der zweite Gehäusedeckel 146 kann mit der ersten Gehäusewand 141, der zweiten Gehäusewand 142, der dritten Gehäusewand 143 und der vierten Gehäusewand 144 verbunden sein.

Ein Abschnitt des zweiten Gehäusedeckels 146 kann die erste Nut 110a in Längsrichtung der ersten Nut 110a begrenzen.

Ebenso kann ein Abschnitt des zweiten Gehäusedeckels 146 die zweite Nut 120a in Längsrichtung der zweiten Nut 120a begrenzen.

Der zweite Gehäusedeckel 146 kann einen Anschluss 146a umfassen. Bevorzugt umfasst zweite Gehäusedeckel 146 zumindest zwei, bevorzugt zumindest drei, bevorzugter zumindest vier, Anschlüsse 146a. Durch den Anschluss 146a kann das Gerät 100 mit der Umgebung verbunden sein. Beispielsweise kann ein Stecker eines Kabels von dem Anschluss 146a aufgenommen werden oder in den Anschluss 146a eingesteckt werden. Dadurch kann eine Datenverbindung zwischen dem Gerät 100 und einem anderen Gerät, beispielsweise mit einem Server, hergestellt werden. Der Anschluss 146a kann eingerichtet sein, elektrische Energie zur Energieversorgung des Geräts 100, ein elektrisches Signal, ein Datensignal und/oder ein optisches Signal zu empfangen und/oder zu senden, oder in das Gerät 100 einzuleiten.

Der Anschluss 146a kann eine Öffnung umfassen, durch die ein Innenraum des Geräts 100 mit der Umgebung des Geräts in Fluidkommunikation steht. Der Anschluss 146a kann verschlossen sein, sodass (über den Anschluss 146a) keine Fluidkommunikation zwischen dem Innenraum des Geräts 100 und der Umgebung des Geräts 100 erfolgen kann.

Eine Nut und/oder eine weitere Nut in der zweiten Gehäusewand 142 kann gleich oder analog zu der Begrenzung der ersten und zweiten Nut 110a, 120a in der ersten Gehäusewand 141 von dem ersten Gehäusedeckel 145 und/oder dem zweiten Gehäusedeckel 146 begrenzt sein.

Insbesondere kann sich jede der Nuten der ersten Gehäusewand 141 und/oder der zweiten Gehäusewand 142 zu zumindest 30 %, bevorzugt zu zumindest 50 %, bevorzugter zu zumindest 70 %, bevorzugter zu zumindest 90 %, bevorzugter vollständig, zwischen dem ersten Gehäusedeckel 145 und dem zweiten Gehäusedeckel 146 erstrecken.

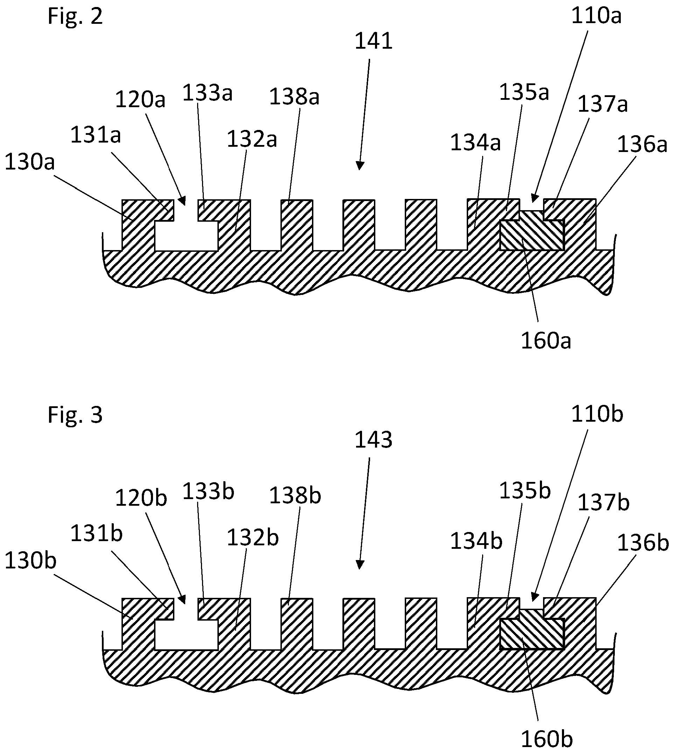

Fig. 2 zeigt schematisch einen Schnitt durch die erste Gehäusewand 141, sodass mehrere Kühlrippen sichtbar sind.

Die erste Gehäusewand 141 kann eine erste Kühlrippe 134a und eine zweite Kühlrippe 136a umfassen. Zwischen der ersten Kühlrippe 134a und der zweiten Kühlrippe 136a kann die erste Nut 110a ausgebildet sein. Insbesondere begrenzt eine Seitenwand der ersten Kühlrippe 134a die erste Nut 110a in einer ersten Richtung (senkrecht zur Längsrichtung der ersten Nut 110a) und eine Seitenwand der zweiten Kühlrippe 136a begrenzt die erste Nut 110a in einer zweiten Richtung (senkrecht zur Längsrichtung der ersten Nut 110a). Die erste Richtung und die zweite Richtung können entgegengesetzte Richtungen sein.

Der Querschnitt (senkrecht zur Längsrichtung der ersten Nut 110a) der ersten Nut 110a kann entlang der Längsrichtung der ersten Nut 110a gleichbleibend oder konstant sein. Die Breite der ersten Nut 110a (zwischen den Seitenwänden der ersten Kühlrippe 134a und der zweiten Kühlrippe 136a) kann sich in einer Richtung, die von dem Gerät 100 wegweist, verändern, insbesondere kann sich die Breite der ersten Nut 110a verringern. Eine Öffnung der ersten Nut 110a kann die geringste Breite der ersten Nut 110a aufweisen.

Die erste Kühlrippe 134a kann einen Abschnitt 135a aufweisen, der sich in Richtung der ersten Nut 110a, insbesondere in Richtung eines Mittelpunktes der Öffnung der ersten Nut 110a, erstreckt. Die zweite Kühlrippe 136a kann einen Abschnitt 137a aufweisen, der sich in Richtung der ersten Nut 110a, insbesondere in Richtung eines Mittelpunktes der Öffnung der ersten Nut 110a, erstreckt. Zwischen dem Abschnitt 135a der ersten Kühlrippe 134a und dem Abschnitt 137a der zweiten Kühlrippe 136a kann die Öffnung der ersten Nut 110a gebildet sein. Die Breite der ersten Nut 110a kann zwischen dem Abschnitt 135a der ersten Kühlrippe 134a und dem Abschnitt 137a der zweiten Kühlrippe 136a geringer sein als die Breite der ersten Nut 110a in einem Abschnitt, der näher an dem Boden der ersten Nut 110a ist als der Abschnitt 135a der ersten Kühlrippe 134a und/oder der Abschnitt 137a der zweiten Kühlrippe 136a. Der Boden der ersten Nut 110a kann der Öffnung der ersten Nut 110a gegenüberliegen.

In der ersten Nut 110a ist ein erstes Befestigungselement 160a angeordnet. Das erste Befestigungselement 160a ist so ausgebildet, dass das erste Befestigungselement 160a in Längsrichtung der ersten Nut 110a verschiebbar ist. Das erste Befestigungselement 160a kann so ausgebildet sein, dass das erste Befestigungselement 160a nicht aus der Öffnung der ersten Nut 110a bewegbar oder herausnehmbar ist.

Weiterhin kann die erste Gehäusewand 141 eine dritte Kühlrippe 130a und eine vierte Kühlrippe 132a aufweisen. Zwischen der dritten Kühlrippe 130a und der vierten Kühlrippe 132a kann eine zweite Nut 120a ausgebildet sein. Insbesondere begrenzt eine Seitenwand der dritten Kühlrippe 130a die zweite Nut 120a in einer ersten Richtung (senkrecht zur Längsrichtung der zweiten Nut 120a) und eine Seitenwand der vierten Kühlrippe 132a begrenzt die zweite Nut 120a in einer zweiten Richtung (senkrecht zur Längsrichtung der zweiten Nut 120a). Die erste Richtung und die zweite Richtung können entgegengesetzte Richtungen sein.

Der Querschnitt (senkrecht zur Längsrichtung der zweiten Nut 120a) der zweiten Nut 120a kann entlang der Längsrichtung der zweiten Nut 120a gleichbleibend oder konstant sein. Die Breite der zweiten Nut 120a (zwischen den Seitenwänden der dritten Kühlrippe 130a und der zweiten Kühlrippe 132a) kann sich in einer Richtung, die von dem Gerät 100 wegweist, verändern, insbesondere kann sich die Breite der zweiten Nut 120a verringern. Eine Öffnung der zweiten Nut 120a kann die geringste Breite der zweiten Nut 120a aufweisen.

Die dritte Kühlrippe 130a kann einen Abschnitt 131a aufweisen, der sich in Richtung der zweiten Nut 120a, insbesondere in Richtung eines Mittelpunktes der Öffnung der zweiten Nut 120a, erstreckt. Die vierte Kühlrippe 132a kann einen Abschnitt 133a aufweisen, der sich in Richtung der zweiten Nut 120a, insbesondere in Richtung eines Mittelpunktes der Öffnung der zweiten Nut 120a, erstreckt. Zwischen dem Abschnitt 131a der dritten Kühlrippe 130a und dem Abschnitt 133a der vierten Kühlrippe 132a kann die Öffnung der zweiten Nut 120a gebildet sein. Die Breite der zweiten Nut 120a kann zwischen dem Abschnitt 131a der dritten Kühlrippe 130a und dem Abschnitt 133a der vierten Kühlrippe 132a geringer sein als die Breite der zweiten Nut 120a in einem Abschnitt, der näher an dem Boden der zweiten Nut 120a ist als der Abschnitt 131a der dritten Kühlrippe 130a und/oder der Abschnitt 133a der vierten Kühlrippe 132a. Der Boden der zweiten Nut 120a kann der Öffnung der zweiten Nut 120a gegenüberliegen.

In der zweiten Nut 120a kann ein zweites Befestigungselement angeordnet sein. Das zweite Befestigungselement kann so ausgebildet sein, dass das zweite Befestigungselement in Längsrichtung der zweiten Nut 120a verschiebbar ist. Das zweite Befestigungselement kann so ausgebildet sein, dass das zweite Befestigungselement nicht aus der Öffnung der zweiten Nut 120a bewegbar oder herausnehmbar ist.

Weitere Kühlrippen 138a können von der ersten Gehäusewand 141 oder in der ersten Gehäusewand 141 ausgebildet sein.

Fig. 3 zeigt schematisch einen Schnitt durch die dritte Gehäusewand 143. In dem Schnitt sind mehrere Kühlrippen sichtbar.

Die dritte Gehäusewand 143 kann gleich oder analog zu der ersten Gehäusewand 141 ausgebildet sein.

Die dritte Gehäusewand 143 kann eine erste Kühlrippe 134b und eine zweite Kühlrippe 136b umfassen. Zwischen der ersten Kühlrippe 134b und der zweiten Kühlrippe 136b kann eine erste Nut 110b ausgebildet sein. Die erste und zweite Kühlrippe 134b, 136b der dritten Gehäusewand 143 kann gleich sein wie der ersten und zweiten Kühlrippe 134a, 136b der ersten Gehäusewand. Die erste Nut 110b der dritten Gehäusewand 143 kann gleich sein wie die erste Nut 110a der ersten Gehäusewand 141.

Die erste Kühlrippe 134b kann einen Abschnitt 135b aufweisen, der sich in Richtung der ersten Nut 110b, insbesondere in Richtung eines Mittelpunktes der Öffnung der ersten Nut 110b, erstreckt. Die zweite Kühlrippe 136b kann einen Abschnitt 137b aufweisen, der sich in Richtung der ersten Nut 110b, insbesondere in Richtung eines Mittelpunktes der Öffnung der ersten Nut 110b, erstreckt. Der Abschnitt 135b der ersten Kühlrippe 134b der dritten Gehäusewand 143 kann gleich sein wie der Abschnitt 135a der ersten Kühlrippe 134a der ersten Gehäusewand 141. Der Abschnitt 137b der zweiten Kühlrippe 136b der dritten Gehäusewand 143 kann gleich sein wie der Abschnitt 137a der zweiten Kühlrippe 136a der ersten Gehäusewand 141.

In der ersten Nut 110b der dritten Gehäusewand 143 kann ein erstes Befestigungselement 160b angeordnet sein. Das erste Befestigungselement 160b der dritten Gehäusewand 143 kann gleich sein wie das erste Befestigungselement 160a der ersten Gehäusewand 141.

Die dritte Gehäusewand 143 kann eine dritte Kühlrippe 130b und eine vierte Kühlrippe 132a umfassen. Zwischen der dritten Kühlrippe 130b und der vierten Kühlrippe 132b kann eine zweite Nut 120b ausgebildet sein. Die dritte Kühlrippe 130b der dritten Gehäusewand 143 und die vierte Kühlrippe 132a der dritten Gehäusewand 143 können gleich sein wie die die dritte Kühlrippe 130a und die vierte Kühlrippe 132a der ersten Gehäusewand 141. Die zweite Nut 120b der dritten Gehäusewand 143 kann gleich sein wie die zweite Nut 120b der ersten Gehäusewand 141.

Die dritte Kühlrippe 130b kann einen Abschnitt 131b aufweisen, der sich in Richtung der zweiten Nut 120b, insbesondere in Richtung eines Mittelpunktes der Öffnung der zweiten Nut 120b, erstreckt. Die vierte Kühlrippe 132b kann einen Abschnitt 133b aufweisen, der sich in Richtung der zweiten Nut 120b, insbesondere in Richtung eines Mittelpunktes der Öffnung der zweiten Nut 120b, erstreckt. Der Abschnitt 130b der dritten Kühlrippe 130b der dritten Gehäusewand 143 kann gleich sein wie der Abschnitt 130a der dritten Kühlrippe 130a der ersten Gehäusewand 141. Der Abschnitt 133b der vierten Kühlrippe 132b der dritten Gehäusewand 143 kann gleich sein wie der Abschnitt 133a der vierten Kühlrippe 132a der ersten Gehäusewand 141.

In der zweiten Nut 120b kann ein zweites Befestigungselement angeordnet sein. Das zweite Befestigungselement kann so ausgebildet sein, dass das zweite Befestigungselement in Längsrichtung der zweiten Nut 120b verschiebbar ist. Das zweite Befestigungselement der dritten Gehäusewand 143 kann gleich sein wie das zweite Befestigungselement der ersten Gehäusewand 141.

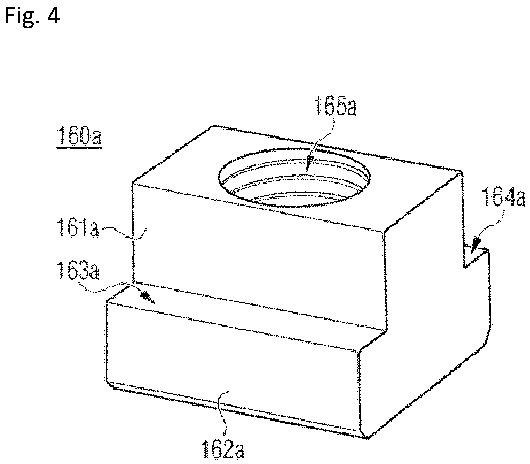

Fig. 4 zeigt ein Beispiel eines Befestigungselements 160a, wobei jedes hierin offenbarte Befestigungselement ausgebildet sein kann wie das Befestigungselement 160a.

Das Befestigungselement 160a kann so ausgebildet sein, dass es in beispielsweise in der ersten Nut 110a in Längsrichtung der ersten Nut 110a verschiebbar ist und ein Herausbewegen oder Herausnehmen des Befestigungselement 160a aus der Öffnung der ersten Nut 110a (senkrecht zu Längsrichtung der ersten Nut 110a) verhindert wird.

Das Befestigungselement 160a kann einen ersten Abschnitt 161a umfassen. Der erste Abschnitt 161a kann im Wesentlichen quaderförmig ausgebildet sein. Das Befestigungselement 160a kann einen zweiten Abschnitt 162a umfassen. Der zweite Abschnitt 162a kann im Wesentlichen quaderförmig ausgebildet sein. Der erste Abschnitt 161a und der zweite Abschnitt 162a können miteinander verbunden sein. Der erste Abschnitt 161a und der zweite Abschnitt 162a können (gemeinsam) einstückig oder monolithisch ausgebildet sein.

Zwischen dem ersten Abschnitt 161a und dem zweiten Abschnitt 162a kann eine erste Stufe 163a ausgebildet sein. Alternativ oder zusätzlich kann zwischen dem ersten Abschnitt 161a und dem zweiten Abschnitt 162a eine zweite Stufe 164a ausgebildet sein. Beispielsweise kann die erste Stufe 163a eingerichtet sein mit einer Kühlrippe 134a, insbesondere mit einem Abschnitt 135a der Kühlrippe 134a, so zusammenzuwirken, dass ein Herausnehmen oder Herausbewegen des Befestigungselements 160a aus der Öffnung der Nut 110a verhindert wird. Alternativ oder zusätzlich kann die zweite Stufe 164a eingerichtet sein mit einer Kühlrippe 136a, insbesondere mit einem Abschnitt 137a der Kühlrippe 136a, so zusammenzuwirken, dass ein Herausnehmen oder Herausbewegen des Befestigungselements 160a aus der Öffnung der Nut 110a zu verhindert wird.

Ebenso kann das Befestigungselement 160a keine Stufe aufweisen. Beispielweise kann das Befestigungselement 160a im Wesentlichen quaderförmig ausgebildet sein. Ein erster Abschnitt einer Oberfläche des Befestigungselements 160a kann eingerichtet sein mit einer Kühlrippe 134a, insbesondere mit einem Abschnitt 135a der Kühlrippe 134a, so zusammenzuwirken, dass ein Herausnehmen oder Herausbewegen des Befestigungselements 160a aus der Öffnung der Nut 110a verhindert wird. Alternativ oder zusätzlich kann ein zweiter Abschnitt einer Oberfläche des Befestigungselements 160a eingerichtet sein mit einer Kühlrippe 136a, insbesondere mit einem Abschnitt 137a der Kühlrippe 136a, so zusammenzuwirken, dass ein Herausnehmen oder Herausbewegen des Befestigungselements 160a aus der Öffnung der Nut 110a zu verhindert wird.

Das Befestigungselement 160a kann eine Aufnahme 165a für ein Befestigungsmittel umfassen. Die Aufnahme 165a kann ein Gewinde, insbesondere ein Innengewinde, umfassen. Die Aufnahme kann ein Durchgangsloch oder ein Sackloch umfassen. Die Aufnahme 165a kann so mit dem Befestigungsmittel zusammenwirken, dass das Befestigungselement 160a beispielsweise in der ersten Nut 110a nicht in Längsrichtung der ersten Nut 110a verschiebbar ist. Beispielsweise kann ein Kraftschluss zwischen dem Befestigungselement 160a und der ersten Nut 110a durch ein zusammenwirken des Befestigungselements 160a und dem Befestigungsmittel herstellbar sein.

Das Befestigungselement 160a kann so ausgebildet sein, dass es in der ersten Nut 110a in Längsrichtung der ersten Nut 110a verschiebbar ist und ein Herausbewegen oder Herausnehmen des Befestigungselements 160a in einer ersten Orientierung oder Position des Befestigungselements 160a aus der Öffnung der ersten Nut 110a (senkrecht zu Längsrichtung der ersten Nut 110a) verhindert wird. In einer zweiten Orientierung oder Position des Befestigungselements 160a kann das Befestigungselement 160a aus der Öffnung der ersten Nut 110a herausnehmbar oder herausbewegbar sein. Ein Übergang von der ersten Orientierung oder Position zu der zweiten Orientierung oder Position des Befestigungselements 160a kann durch ein Schwenken oder durch eine Rotation des Befestigungselements 160a durchführbar sein. Das Schwenken oder die Rotation kann um eine Achse senkrecht zur Längsrichtung der ersten Nut 110a durchführbar sein.

Beispielsweise kann das Befestigungselement 160a in der zweiten Orientierung oder Position in die Öffnung der ersten Nut 110a eingebracht werden. Das Befestigungselement 160a kann in der ersten Nut 110a in die erste Orientierung oder Position gebracht werden. In der ersten Orientierung oder Position kann ein Herausnehmen des Befestigungselements 160a aus der Öffnung verhindert sein. Dadurch kann das Befestigungselement 160a in die erste Nut 110a eingebracht und darin befestigt werden, wenn die Enden (in Längsrichtung) der ersten Nut 110a verschlossen sind.

Das Befestigungselement 160a kann eine größere Breite als Länge aufweisen, insbesondere ist die Breite zumindest doppelt so groß wie die Länge des Befestigungselements 160a. Die Länge und Breite des Befestigungselements 160a können in einer Ebene parallel zu einer von der ersten Gehäusewand 141 definierten Ebene orientiert sein, insbesondere wenn das Befestigungselement 160a in der ersten Nut 110a angeordnet ist.

Das Befestigungselement 160a kann im Wesentlichen rautenförmig sein.

Das Befestigungselement 160a kann durch ein Befestigungsmittel, beispielsweise eine Schraube, in der ersten Nut 110a befestigt werden. Dazu kann eine Zugkraft (eine Kraft senkrecht zur Längsrichtung der ersten Nut 110a) ausgeübt werden. Ist das Befestigungselement 160a in der ersten Nut 110a befestigt, kann das Befestigungselement 160a nicht in Längsrichtung der ersten Nut 110a bewegbar sein.

Fig. 5 zeigt eine Außenbereichsvorrichtung 800. Die Außenbereichsvorrichtung 800, beispielsweise ein Mast, weist eine Öffnung 810 auf. Durch die Öffnung 810 kann ein Innenraum der Außenbereichsvorrichtung 800 zugänglich sein. Die Öffnung 810 kann durch eine Klappe (nicht in Fig. 5 dargestellt) verschließbar und öffenbar sein.

Die Außenbereichsvorrichtung 800 kann eine Montagehalterung 820 umfassen. Die Montagehalterung 820 kann eine Schiene oder eine Tragschiene, bevorzugt eine Hutschiene, sein.

In der Außenbereichsvorrichtung 800 kann ein Gerät 100 angeordnet sein. Das Gerät 100 kann an der Montagehalterung 820 montiert oder fixiert sein. Insbesondere ist eine Halterung, beispielsweise wie unten beschrieben, mit dem Gerät 100 und mit der Montagehalterung 820 verbunden.

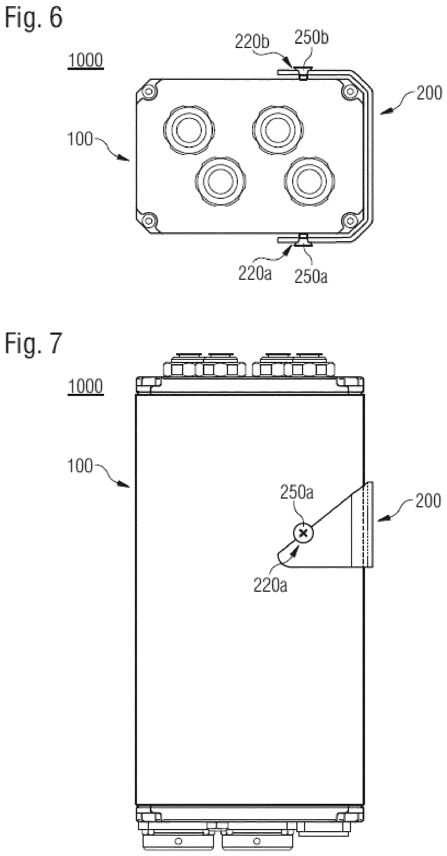

Die Figs. 6 und 7 zeigen schematisch ein System 1000. Dabei zeigt Fig. 6 das System 1000 in einer Draufsicht und Fig. 7 zeigt das System 1000 in einer Seitenansicht. Das System 1000 umfasst ein Gerät 100, eine Halterung 200, ein erstes Befestigungselement 160a (nicht dargestellt), ein zweites Befestigungselement 160b (nicht dargestellt), ein erstes Befestigungsmittel 250a und ein zweites Befestigungsmittel 250b.

Wie oben detaillierter beschrieben, kann das Gerät 100 eine erste Gehäusewand 141 und eine zweite Gehäusewand 142 umfassen. Von der ersten Gehäusewand 141 kann eine erste Nut 110a gebildet sein und von der zweiten Gehäusewand 142 kann eine zweite Nut 110b gebildet sein. In der ersten Nut 110a kann ein erstes Befestigungselement 160a angeordnet sein und in der zweiten Nut 110b kann ein zweites Befestigungselement 160b angeordnet sein. Die erste Gehäusewand 141 kann der zweiten Gehäusewand 142 gegenüberliegen.

Das erste Befestigungsmittel 250a, beispielsweise eine Schraube, kann mit dem ersten Befestigungselement 160a verbunden sein. Das erste Befestigungsmittel 250a kann so mit dem ersten Befestigungselement 160a verbunden sein, dass eine feste Verbindung zwischen dem ersten Befestigungsmittel 250a und dem ersten Befestigungselement 160a besteht, insbesondere kann durch die Verbindung des ersten Befestigungsmittels 250a mit dem ersten Befestigungselement 160a eine Position oder Lage des ersten Befestigungselements 160a in der ersten Nut 110a (unverschiebbar) festgelegt sein. Das zweite Befestigungsmittel 250b, beispielsweise eine Schraube, kann mit dem zweiten Befestigungselement 160b verbunden sein. Das zweite Befestigungsmittel 250b kann so mit dem zweiten Befestigungselement 160b verbunden sein, dass eine feste Verbindung zwischen dem zweiten Befestigungsmittel 250b und dem zweiten Befestigungselement 160b besteht, insbesondere kann durch die Verbindung des zweiten Befestigungsmittels 250b mit dem zweiten Befestigungselement 160b eine Position oder Lage des zweiten Befestigungselements 160b in der zweiten Nut 110b (unverschiebbar) festgelegt sein.

Die Halterung 200 kann eine erste Aussparung 220a und eine zweite Aussparung 220b aufweisen. Die erste Aussparung 220a und die zweite Aussparung 220b können einseitig geöffnet sein. In die erste Aussparung 220a kann das erste Befestigungsmittel 250a eingebracht oder eingelegt sein. In die zweite Aussparung 220b kann das zweite Befestigungsmittel 250b eingebracht oder eingelegt sein.

Die Halterung 200 kann mit einer Außenbereichsvorrichtung 800 (fest) verbunden sein. Ein Nutzer kann das Gerät 100 mit dem ersten und zweiten Befestigungsmittel 250a, 250b und dem ersten und zweiten Befestigungselement 160a, 160b in Richtung der Halterung 200 in der Außenbereichsvorrichtung 800 führen und das Gerät 100 so in die Halterung 200 einlegen oder einhängen, dass das erste Befestigungsmittel 250a in der ersten Aussparung 220a der Halterung 200 und das zweite Befestigungsmittel 250b in der zweiten Aussparung 220b der Halterung 200 liegt. Zum Entfernen des Geräts 100, kann dieses aus der Halterung 200 herausgenommen oder herausgehoben werden.

Die Halterung 200 kann eine Bügelhalterung sein. Die Halterung 200 kann eine C-förmige oder eine U-förmige Grundform aufweisen. Wenn das Gerät 100 mit der Halterung 200 verbunden ist, kann die Halterung einen Abschnitt der ersten Gehäusewand 141, einen Abschnitt der zweiten Gehäusewand 142 und einen Abschnitt der dritten Gehäusewand 143 überlagern oder bedecken.

Ein Abschnitt der Halterung 200, der die erste Gehäusewand 141 überlagert oder bedeckt kann eine zunehmende Höhe (in Richtung der Achse des Geräts 100) aufweisen. Die Höhe des Abschnitts der Halterung 200, der die erste Gehäusewand 141 überlagert oder bedeckt kann in Richtung des Abschnitt der Halterung 200, der die dritte Gehäusewand 143 überlagert oder bedeckt zunehmen. Ein Abschnitt der Halterung 200, der die zweite Gehäusewand 142 überlagert oder bedeckt kann eine zunehmende Höhe (in Richtung der Achse des Geräts 100) aufweisen. Die Höhe des Abschnitts der Halterung 200, der die zweite Gehäusewand 142 überlagert oder bedeckt kann in Richtung des Abschnitt der Halterung 200, der die dritte Gehäusewand 143 überlagert oder bedeckt zunehmen. Ein Abschnitt der Halterung 200, der die dritte Gehäusewand 143 überlagert oder bedeckt kann eine konstante Höhe aufweisen.

Das System 1000 kann zwei der Halterungen 200. umfassen. Dazu kann das System 1000 ein drittes Befestigungselement und ein viertes Befestigungselement sowie ein drittes Befestigungsmittel und ein viertes Befestigungsmittel umfassen. Das dritte Befestigungselement kann in der ersten Nut 110a der ersten Gehäusewand 141 und das vierte Befestigungselement kann in der zweiten Nut 110b der zweiten Gehäusewand 142 angeordnet sein. Das dritte Befestigungselement kann mit dem dritten Befestigungsmittel verbunden sein und das vierte Befestigungselement kann mit dem vierten Befestigungsmittel verbunden sein.

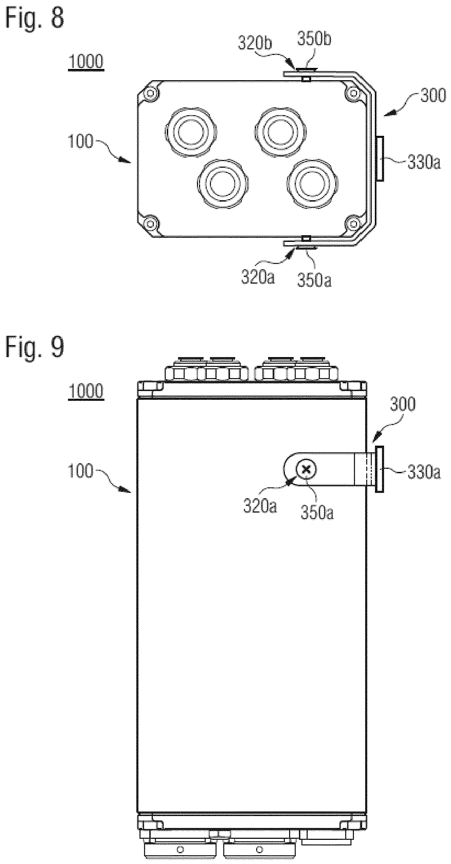

Die Figs. 8 und 9 zeigen schematisch ein System 1000. Dabei zeigt Fig. 8 das System 1000 in einer Draufsicht und Fig. 9 zeigt das System 1000 in einer Seitenansicht. Das System 1000 umfasst ein Gerät 100, eine Halterung 300, ein erstes Befestigungselement 160a (nicht dargestellt), ein zweites Befestigungselement 160b (nicht dargestellt), ein erstes Befestigungsmittel 350a und ein zweites Befestigungsmittel 350b.

Das Gerät 100 kann eine erste Gehäusewand 141 und eine zweite Gehäusewand 142 umfassen. Von der ersten Gehäusewand 141 kann eine erste Nut 110a gebildet sein und von der zweiten Gehäusewand 142 kann eine zweite Nut 110b gebildet sein. In der ersten Nut 110a kann ein erstes Befestigungselement 160a angeordnet sein und in der zweiten Nut 110b kann ein zweites Befestigungselement 160b angeordnet sein. Die erste Gehäusewand 141 kann der zweiten Gehäusewand 142 gegenüberliegen.

Das erste Befestigungsmittel 350a, beispielsweise eine Schraube, kann mit dem ersten Befestigungselement 160a verbunden sein. Das erste Befestigungsmittel 350a kann so mit dem ersten Befestigungselement 160a verbunden sein, dass eine feste Verbindung zwischen dem ersten Befestigungsmittel 350a und dem ersten Befestigungselement 160a besteht, insbesondere kann durch die Verbindung des ersten Befestigungsmittels 350a mit dem ersten Befestigungselement 160a eine Position oder Lage des ersten Befestigungselements 160a in der ersten Nut 110a (unverschiebbar) festgelegt sein. Das zweite Befestigungsmittel 350b, beispielsweise eine Schraube, kann mit dem zweiten Befestigungselement 160b verbunden sein. Das zweite Befestigungsmittel 350b kann so mit dem zweiten Befestigungselement 160b verbunden sein, dass eine feste Verbindung zwischen dem zweiten Befestigungsmittel 350b und dem zweiten Befestigungselement 160b besteht, insbesondere kann durch die Verbindung des zweiten Befestigungsmittels 350b mit dem zweiten Befestigungselement 160b eine Position oder Lage des zweiten Befestigungselements 160b in der zweiten Nut 110b (unverschiebbar) festgelegt sein.

Die Halterung 300 kann eine erste Ausnehmung 320a umfassen, beispielsweise ein Loch, ein Durchgangsloch, eine Durchgangsbohrung und/oder einen Schlitz. Die Halterung 300 kann eine zweite Ausnehmung 320b umfassen, beispielsweise ein Loch, ein Durchgangsloch, eine Durchgangsbohrung und/oder einen Schlitz. Die erste Ausnehmung 320a und/oder die zweite Ausnehmung 320b kann sich vollständig durch einen jeweiligen Abschnitt der Halterung 300 erstrecken. Die erste Ausnehmung und/oder die zweite Ausnehmung 320b kann randseitig vollständig von einem jeweiligen Abschnitt der Halterung 300 umgeben sein. Alternativ kann die erste Ausnehmung 320a und/oder die zweite Ausnehmung 320b jeweils randseitig auf einer Seite, insbesondere auf genau einer Seite, geöffnet sein. Dadurch kann das Gerät 100 auf die Halterung 300 geschoben oder gesteckt werden. Insbesondere kann dadurch ein oder zwei Befestigungsmittel des Geräts 100 auf die Halterung 300 geschoben oder gesteckt werden. Die Halterung 300 kann einen ersten Schlitz und ein erstes Loch aufweisen. Zusätzlich kann die Halterung 300 einen zweiten Schlitz und ein zweites Loch aufweisen. Der Durchmesser oder die Breite eines Lochs kann größer sein als die Breite eines Schlitzes. Ein Schlitz und ein Loch können (direkt) ineinander übergehen.

Das erste Befestigungsmittel 350a kann durch die erste Ausnehmung 320a geführt sein oder durch die erste Ausnehmung 320a hindurchgreifen. Das erste Befestigungsmittel 350a kann mit dem ersten Befestigungselement 160a verbunden sein. Dadurch kann die Halterung 300 mit dem Gerät 100 verbunden sein.

Alternativ oder zusätzlich kann das zweite Befestigungsmittel 350b durch die zweite Ausnehmung 320b geführt sein oder durch die zweite Ausnehmung 320b hindurchgreifen. Das zweite Befestigungsmittel 350b kann mit dem zweiten Befestigungselement 160b verbunden sein.

Ein Abschnitt der Halterung 300 kann die erste Gehäusewand 141 überlagern oder bedecken. Ein Abschnitt der Halterung 300 kann die zweite Gehäusewand 142 überlagern oder bedecken. Ein Abschnitt der Halterung 300 kann die dritte Gehäusewand 143 überlagern oder bedecken.

Die Halterung 300 kann ein Halteelement 330a umfassen. Das Halteelement 330a kann mit dem Abschnitt der Halterung 300 verbunden sein oder dort angeordnet sein, der die dritte Gehäusewand 143 überlagert oder bedeckt. Das Halteelement 330a kann ein Magnet, insbesondere ein Permanentmagnet, eine Schienenklammer, insbesondere eine Hutschienenklammer, eine Schraube, ein Bolzen, ein Rastelement, ein Klemmelement, ein Klettelement und/oder ein Klebeelement sein. Bevorzugt ist das Halteelement 330a ein Magnet, insbesondere ein Permanentmagnet.

Durch das Halteelement 330a kann das Gerät 100 mit einer Außenbereichsvorrichtung 800 verbunden sein. Dabei kann das Halteelement 330a mit einer Wand der Außenbereichsvorrichtung 800 verbunden sein oder das Halteelement 330a kann mit einer Montagehalterung 820 der Außenbereichsvorrichtung 800 verbunden sein.

Das System 1000 kann zwei der Halterungen 300 umfassen. Dazu kann das System 1000 ein drittes Befestigungselement und ein viertes Befestigungselement sowie ein drittes Befestigungsmittel und ein viertes Befestigungsmittel umfassen. Das dritte Befestigungselement kann in der ersten Nut 110a der ersten Gehäusewand 141 und das vierte Befestigungselement kann in der zweiten Nut 110b der zweiten Gehäusewand 142 angeordnet sein. Das dritte Befestigungselement kann mit dem dritten Befestigungsmittel verbunden sein und das vierte Befestigungselement kann mit dem vierten Befestigungsmittel verbunden sein.

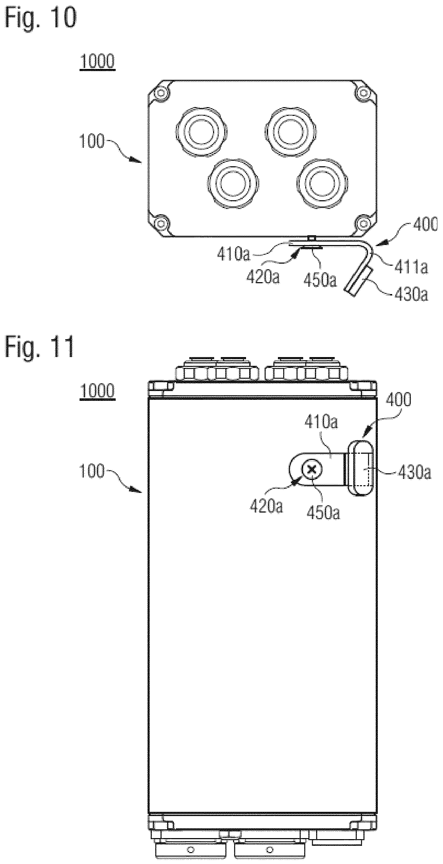

Die Figs. 10 und 11 zeigen schematisch ein System 1000. Dabei zeigt Fig. 10 das System 1000 in einer Draufsicht und Fig. 11 zeigt das System 1000 in einer Seitenansicht. Das System 1000 umfasst ein Gerät 100, eine Halterung 400, ein erstes Befestigungselement 160a (nicht dargestellt), und ein erstes Befestigungsmittel 450a.

Das Gerät 100 kann eine erste Gehäusewand 141 umfassen. Von der ersten Gehäusewand 141 kann eine erste Nut 110a gebildet sein. In der ersten Nut 110a kann ein erstes Befestigungselement 160a angeordnet sein.

Das erste Befestigungsmittel 450a, beispielsweise eine Schraube, kann mit dem ersten Befestigungselement 160a verbunden sein. Das erste Befestigungsmittel 450a kann so mit dem ersten Befestigungselement 160a verbunden sein, dass eine feste Verbindung zwischen dem ersten Befestigungsmittel 450a und dem ersten Befestigungselement 160a besteht, insbesondere kann durch die Verbindung des ersten Befestigungsmittels 450a mit dem ersten Befestigungselement 160a eine Position oder Lage des ersten Befestigungselements 160a in der ersten Nut 110a (unverschiebbar) festgelegt sein.

Die Halterung 400 kann eine erste Ausnehmung 420a umfassen, beispielsweise ein Loch, ein Durchgangsloch, eine Durchgangsbohrung und/oder einen Schlitz. Die erste Ausnehmung 420a kann sich vollständig durch einen Abschnitt der Halterung 400 erstrecken. Die erste Ausnehmung 420a kann randseitig vollständig von einem Abschnitt der Halterung 400 umgeben sein. Alternativ kann die Ausnehmung 420a randseitig auf einer Seite, insbesondere auf genau einer Seite, geöffnet sein. Dadurch kann das Gerät 100 auf die Halterung 400 geschoben oder gesteckt werden. Insbesondere kann dadurch ein Befestigungsmittel des Geräts 100 auf die Halterung 400 geschoben oder gesteckt werden. Die Halterung 400 kann einen Schlitz und ein Loch aufweisen. Der Durchmesser oder die Breite des Lochs kann größer sein als die Breite des Schlitzes. Der Schlitz und das Loch können (direkt) ineinander übergehen.

Das erste Befestigungsmittel 450a kann durch die erste Ausnehmung 420a geführt sein oder durch die erste Ausnehmung 420a hindurchgreifen. Das erste Befestigungsmittel 450a kann mit dem ersten Befestigungselement 160a verbunden sein. Dadurch kann die Halterung 400 mit dem Gerät 100 verbunden sein.

Die Halterung 400 kann einen ersten Abschnitt 410a und einen zweiten Abschnitt 411a umfassen. Der erste Abschnitt 410a der Halterung 400 kann die erste Gehäusewand 141 überlagern oder bedecken. Der zweite Abschnitt 411a der Halterung 400 kann gegenüber dem ersten Abschnitt 410a der Halterung 400 abgewinkelt sein. Der zweite Abschnitt 411a kann keine Gehäusewand des Geräts 100 überlagern oder bedecken. Bevorzugt ist der zweite Abschnitt 411a gegenüber dem ersten Abschnitt 410a so abgewinkelt, dass sich dieser von dem Gerät 100 weg erstreckt. Der erste Abschnitt 410a und der zweite Abschnitt 411a der Halterung 400 können einstückig oder monolithisch ausgebildet sein.

Die Halterung 400 kann ein Halteelement 430a umfassen. Das Halteelement 430a kann mit dem zweiten Abschnitt 411a der Halterung 400 verbunden sein oder dort angeordnet sein. Das Halteelement 430a kann ein Magnet, insbesondere ein Permanentmagnet, eine Schienenklammer, insbesondere eine Hutschienen-klammer, eine Schraube, ein Bolzen, ein Rastelement, ein Klemmelement, ein Klettelement und/oder ein Klebeelement sein. Bevorzugt ist das Halteelement 430a ein Magnet, insbesondere ein Permanentmagnet.

Durch das Halteelement 430a kann das Gerät 100 mit einer Außenbereichsvorrichtung 800 verbunden sein. Dabei kann das Halteelement 330a mit einer Wand der Außenbereichsvorrichtung 800 verbunden sein oder das Halteelement 330a kann mit einer Montagehalterung 820 der Außenbereichsvorrichtung 800 verbunden sein.

Das System 1000 kann zwei der Halterungen 400 umfassen. Das System kann zweites Befestigungselement und ein zweites Befestigungsmittel umfassen Das zweite Befestigungselement kann mit dem zweiten Befestigungsmittel verbunden sein. Das zweite Befestigungselement kann in der ersten Nut 110a der ersten Gehäusewand 141 angeordnet sein. Alternativ kann das zweite Befestigungselement in einer zweiten Nut 110b einer zweiten Gehäusewand 142 des Geräts angeordnet sein.

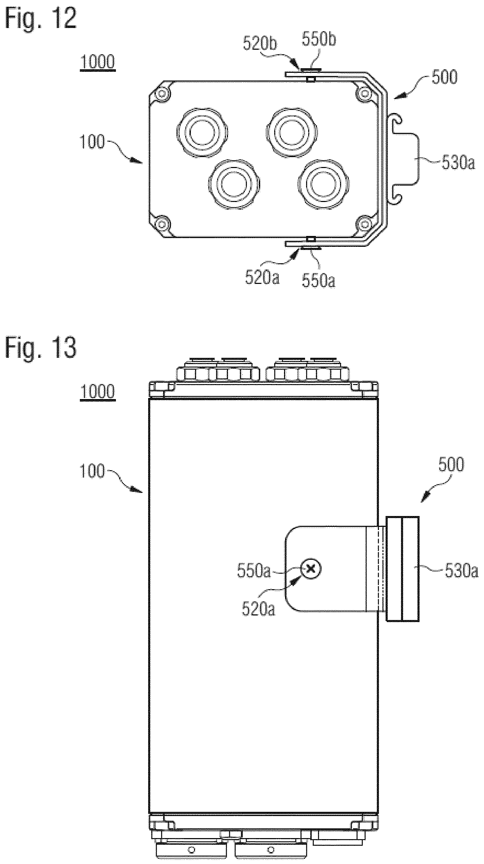

Die Figs. 12 und 13 zeigen schematisch ein System 1000. Dabei zeigt Fig. 12 das System 1000 in einer Draufsicht und Fig. 13 zeigt das System 1000 in einer Seitenansicht. Das System 1000 umfasst ein Gerät 100, eine Halterung 500, ein erstes Befestigungselement 160a (nicht dargestellt), ein zweites Befestigungselement 160b (nicht dargestellt), ein erstes Befestigungsmittel 550a und ein zweites Befestigungsmittel 550b.

Das Gerät 100 kann eine erste Gehäusewand 141 und eine zweite Gehäusewand 142 umfassen. Von der ersten Gehäusewand 141 kann eine erste Nut 110a gebildet sein und von der zweiten Gehäusewand 142 kann eine zweite Nut 110b gebildet sein. In der ersten Nut 110a kann ein erstes Befestigungselement 160a angeordnet sein und in der zweiten Nut 110b kann ein zweites Befestigungselement 160b angeordnet sein. Die erste Gehäusewand 141 kann der zweiten Gehäusewand 142 gegenüberliegen.

Das erste Befestigungsmittel 550a, beispielsweise eine Schraube, kann mit dem ersten Befestigungselement 160a verbunden sein. Das erste Befestigungsmittel 550a kann so mit dem ersten Befestigungselement 160a verbunden sein, dass eine feste Verbindung zwischen dem ersten Befestigungsmittel 550a und dem ersten Befestigungselement 160a besteht, insbesondere kann durch die Verbindung des ersten Befestigungsmittels 550a mit dem ersten Befestigungselement 160a eine Position oder Lage des ersten Befestigungselements 160a in der ersten Nut 110a (unverschiebbar) festgelegt sein. Das zweite Befestigungsmittel 550b, beispielsweise eine Schraube, kann mit dem zweiten Befestigungselement 160b verbunden sein. Das zweite Befestigungsmittel 550b kann so mit dem zweiten Befestigungselement 160b verbunden sein, dass eine feste Verbindung zwischen dem zweiten Befestigungsmittel 550b und dem zweiten Befestigungselement 160b besteht, insbesondere kann durch die Verbindung des zweiten Befestigungsmittels 550b mit dem zweiten Befestigungselement 160b eine Position oder Lage des zweiten Befestigungselements 160b in der zweiten Nut 110b (unverschiebbar) festgelegt sein.

Die Halterung 500 kann eine erste Ausnehmung 520a umfassen, beispielsweise ein Loch, ein Durchgangsloch, eine Durchgangsbohrung und/oder einen Schlitz. Die Halterung 500 kann eine zweite Ausnehmung 520b umfassen, beispielsweise ein Loch, ein Durchgangsloch, eine Durchgangsbohrung und/oder einen Schlitz. Die erste Ausnehmung 520a und/oder die zweite Ausnehmung 520b kann sich vollständig durch einen jeweiligen Abschnitt der Halterung 500 erstrecken. Die erste Ausnehmung und/oder die zweite Ausnehmung 520b kann randseitig vollständig von einem jeweiligen Abschnitt der Halterung 500 umgeben sein. Alternativ kann die erste Ausnehmung 520a und/oder die zweite Ausnehmung 520b jeweils randseitig auf einer Seite, insbesondere auf genau einer Seite, geöffnet sein. Dadurch kann das Gerät 100 auf die Halterung 500 geschoben oder gesteckt werden. Insbesondere kann dadurch ein oder zwei Befestigungsmittel des Geräts 100 auf die Halterung 500 geschoben oder gesteckt werden. Die Halterung 500 kann einen ersten Schlitz und ein erstes Loch aufweisen. Zusätzlich kann die Halterung 500 einen zweiten Schlitz und ein zweites Loch aufweisen. Der Durchmesser oder die Breite eines Lochs kann größer sein als die Breite eines Schlitzes. Ein Schlitz und ein Loch können (direkt) ineinander übergehen.

Das erste Befestigungsmittel 550a kann durch die erste Ausnehmung 520a geführt sein oder durch die erste Ausnehmung 520a hindurchgreifen. Das erste Befestigungsmittel 550a kann mit dem ersten Befestigungselement 160a verbunden sein. Dadurch kann die Halterung 500 mit dem Gerät 100 verbunden sein.

Alternativ oder zusätzlich kann das zweite Befestigungsmittel 550b durch die zweite Ausnehmung 520b geführt sein oder durch die zweite Ausnehmung 520b hindurchgreifen. Das zweite Befestigungsmittel 550b kann mit dem zweiten Befestigungselement 160b verbunden sein.

Ein Abschnitt der Halterung 500 kann die erste Gehäusewand 141 überlagern oder bedecken. Ein Abschnitt der Halterung 500 kann die zweite Gehäusewand 142 überlagern oder bedecken. Ein Abschnitt der Halterung 500 kann die dritte Gehäusewand 143 überlagern oder bedecken.

Die Halterung 500 kann ein Halteelement 530a umfassen. Das Halteelement 530a kann mit dem Abschnitt der Halterung 500 verbunden sein oder dort angeordnet sein, der die dritte Gehäusewand 143 überlagert oder bedeckt. Das Halteelement 530a kann ein Magnet, insbesondere ein Permanentmagnet, eine Schienenklammer, insbesondere eine Hutschienenklammer, eine Schraube, ein Bolzen, ein Rastelement, ein Klemmelement, ein Klettelement und/oder ein Klebeelement sein. Bevorzugt ist das Halteelement 530a eine Klammer, bevorzugt eine Schienenklammer, bevorzugter eine Hutschienenklammer.

Durch das Halteelement 530a kann das Gerät 100 mit einer Außenbereichsvorrichtung 800 verbunden sein. Dabei kann das Halteelement 530a mit einer Montagehalterung 820 der Außenbereichsvorrichtung 800 verbunden sein. Die Montagehalterung 820 ist insbesondere eine Hutschiene.

Das System 1000 kann zwei der Halterungen 500 umfassen. Dazu kann das System 1000 ein drittes Befestigungselement und ein viertes Befestigungselement sowie ein drittes Befestigungsmittel und ein viertes Befestigungsmittel umfassen. Das dritte Befestigungselement kann in der ersten Nut 110a der ersten Gehäusewand 141 und das vierte Befestigungselement kann in der zweiten Nut 110b der zweiten Gehäusewand 142 angeordnet sein. Das dritte Befestigungselement kann mit dem dritten Befestigungsmittel verbunden sein und das vierte Befestigungselement kann mit dem vierten Befestigungsmittel verbunden sein.

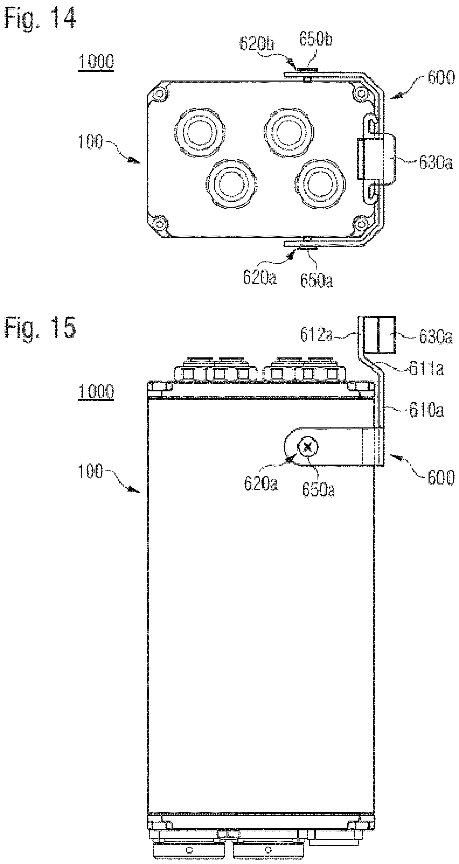

Die Figs. 14 und 15 zeigen schematisch ein System 1000. Dabei zeigt Fig. 14 das System 1000 in einer Draufsicht und Fig. 15 zeigt das System 1000 in einer Seitenansicht. Das System 1000 umfasst ein Gerät 100, eine Halterung 600, ein erstes Befestigungselement 160a (nicht dargestellt), ein zweites Befestigungselement 160b (nicht dargestellt), ein erstes Befestigungsmittel 650a und ein zweites Befestigungsmittel 650b.

Das Gerät 100 kann eine erste Gehäusewand 141 und eine zweite Gehäusewand 142 umfassen. Von der ersten Gehäusewand 141 kann eine erste Nut 110a gebildet sein und von der zweiten Gehäusewand 142 kann eine zweite Nut 110b gebildet sein. In der ersten Nut 110a kann ein erstes Befestigungselement 160a angeordnet sein und in der zweiten Nut 110b kann ein zweites Befestigungselement 160b angeordnet sein. Die erste Gehäusewand 141 kann der zweiten Gehäusewand 142 gegenüberliegen.

Das erste Befestigungsmittel 650a, beispielsweise eine Schraube, kann mit dem ersten Befestigungselement 160a verbunden sein. Das erste Befestigungsmittel 650a kann so mit dem ersten Befestigungselement 160a verbunden sein, dass eine feste Verbindung zwischen dem ersten Befestigungsmittel 650a und dem ersten Befestigungselement 160a besteht, insbesondere kann durch die Verbindung des ersten Befestigungsmittels 650a mit dem ersten Befestigungselement 160a eine Position oder Lage des ersten Befestigungselements 160a in der ersten Nut 110a (unverschiebbar) festgelegt sein. Das zweite Befestigungsmittel 650b, beispielsweise eine Schraube, kann mit dem zweiten Befestigungselement 160b verbunden sein. Das zweite Befestigungsmittel 650b kann so mit dem zweiten Befestigungselement 160b verbunden sein, dass eine feste Verbindung zwischen dem zweiten Befestigungsmittel 650b und dem zweiten Befestigungselement 160b besteht, insbesondere kann durch die Verbindung des zweiten Befestigungsmittels 650b mit dem zweiten Befestigungselement 160b eine Position oder Lage des zweiten Befestigungselements 160b in der zweiten Nut 110b (unverschiebbar) festgelegt sein.

Die Halterung 600 kann eine erste Ausnehmung 620a umfassen, beispielsweise ein Loch, ein Durchgangsloch, eine Durchgangsbohrung und/oder einen Schlitz. Die Halterung 600 kann eine zweite Ausnehmung 620b umfassen, beispielsweise ein Loch, ein Durchgangsloch, eine Durchgangsbohrung und/oder einen Schlitz. Die erste Ausnehmung 620a und/oder die zweite Ausnehmung 620b kann sich vollständig durch einen jeweiligen Abschnitt der Halterung 600 erstrecken. Die erste Ausnehmung und/oder die zweite Ausnehmung 620b kann randseitig vollständig von einem jeweiligen Abschnitt der Halterung 600 umgeben sein. Alternativ kann die erste Ausnehmung 620a und/oder die zweite Ausnehmung 620b jeweils randseitig auf einer Seite, insbesondere auf genau einer Seite, geöffnet sein. Dadurch kann das Gerät 100 auf die Halterung 600 geschoben oder gesteckt werden. Insbesondere kann dadurch ein oder zwei Befestigungsmittel des Geräts 100 auf die Halterung 600 geschoben oder gesteckt werden. Die Halterung 600 kann einen ersten Schlitz und ein erstes Loch aufweisen. Zusätzlich kann die Halterung 600 einen zweiten Schlitz und ein zweites Loch aufweisen. Der Durchmesser oder die Breite eines Lochs kann größer sein als die Breite eines Schlitzes. Ein Schlitz und ein Loch können (direkt) ineinander übergehen.

Das erste Befestigungsmittel 650a kann durch die erste Ausnehmung 620a geführt sein oder durch die erste Ausnehmung 620a hindurchgreifen. Das erste Befestigungsmittel 650a kann mit dem ersten Befestigungselement 160a verbunden sein. Dadurch kann die Halterung 600 mit dem Gerät 100 verbunden sein.

Alternativ oder zusätzlich kann das zweite Befestigungsmittel 650b durch die zweite Ausnehmung 620b geführt sein oder durch die zweite Ausnehmung 620b hindurchgreifen. Das zweite Befestigungsmittel 650b kann mit dem zweiten Befestigungselement 160b verbunden sein.

Die Halterung 600 kann einen ersten Abschnitt 610a, einen zweiten Abschnitt 611a und einen dritten Abschnitt 612a umfassen. Der zweite Abschnitt 611a kann sich an den ersten Abschnitt 610a anschließen. Der dritte Abschnitt 612a kann sich an den zweiten Abschnitt 611a anschließen. Der zweite Abschnitt 611a kann zwischen dem ersten Abschnitt 610a und dem dritten Abschnitt 612a ausgebildet sein.

Der erste Abschnitt 610a kann eine dritte Gehäusewand 143 überlagern oder bedecken. Die dritte Gehäusewand 143 kann zwischen der ersten Gehäusewand 141 und der zweiten Gehäusewand 142 gelegen oder ausgebildet sein. Der zweite Abschnitt 611a kann relativ zu dem ersten Abschnitt 610a abgewinkelt sein. Der zweite Abschnitt 611a kann keine Gehäusewand des Geräts 100 überlagern oder bedecken. Der zweite Abschnitt 611a kann sich in Richtung der Achse des Geräts 100 erstrecken oder kann in Richtung der Achse des Geräts 100 abgewinkelt sein. Der zweite Abschnitt 611a kann einen Gehäusedeckel des Geräts 100 überdecken oder überlagern. Der zweite Abschnitt 611a kann über das Gerät 100 (in Richtung der Achse des Geräts 100) hinausragen. Der dritte Abschnitt 612a kann relativ zu dem zweiten Abschnitt 611a abgewinkelt sein. Der dritte Abschnitt 612a kann sich im Wesentlichen (± 10 % oder ± 5 %) parallel zu dem ersten Abschnitt 610a erstrecken. Der dritte Abschnitt 612a kann über das Gerät 100 (in Richtung der Achse des Geräts 100) hinausragen.

Der erste Abschnitt 610a, der zweite Abschnitt 611a und der dritte Abschnitt 612a können einstückig oder monolithisch ausgebildet sein.

Die Halterung 600 kann ein Halteelement 630a umfassen. Das Halteelement 630a kann mit dem dritten Abschnitt 612a der Halterung 600 verbunden sein oder dort angeordnet sein. Das Halteelement 630a kann ein Magnet, insbesondere ein Permanentmagnet, eine Schienenklammer, insbesondere eine Hutschienenklammer, eine Schraube, ein Bolzen, ein Rastelement, ein Klemmelement, ein Klettelement und/oder ein Klebeelement sein. Bevorzugt ist das Halteelement 630a eine Klammer, bevorzugt eine Schienenklammer, bevorzugter eine Hutschienenklammer.

Durch das Halteelement 630a kann das Gerät 100 mit einer Außenbereichsvorrichtung 800 verbunden sein. Dabei kann das Halteelement 630a mit einer Montagehalterung 820 der Außenbereichsvorrichtung 800 verbunden sein. Die Montagehalterung 820 ist insbesondere eine Hutschiene.

Das System 1000 kann zwei der Halterungen 600 umfassen. Dazu kann das System 1000 ein drittes Befestigungselement und ein viertes Befestigungselement sowie ein drittes Befestigungsmittel und ein viertes Befestigungsmittel umfassen. Das dritte Befestigungselement kann in der ersten Nut 110a der ersten Gehäusewand 141 und das vierte Befestigungselement kann in der zweiten Nut 110b der zweiten Gehäusewand 142 angeordnet sein. Das dritte Befestigungselement kann mit dem dritten Befestigungsmittel verbunden sein und das vierte Befestigungselement kann mit dem vierten Befestigungsmittel verbunden sein.

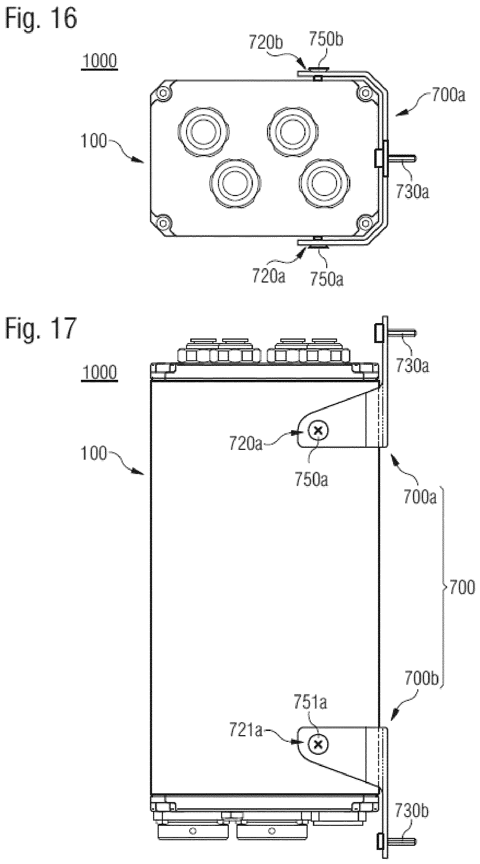

Die Figs. 16 und 17 zeigen schematisch ein System 1000. Dabei zeigt Fig. 16 das System 1000 in einer Draufsicht und Fig. 17 zeigt das System 1000 in einer Seitenansicht. Das System 1000 umfasst ein Gerät 100, eine Halterung 700, ein erstes Befestigungselement 160a (nicht dargestellt), ein zweites Befestigungselement 160b (nicht dargestellt), ein erstes Befestigungsmittel 750a und ein zweites Befestigungsmittel 750b. Die Halterung 700 kann eine erste Halterung 700a und eine zweite Halterung 700b umfassen. Weiterhin kann das System 1000 ein drittes Befestigungselement (nicht dargestellt), ein viertes Befestigungselement (nicht dargestellt), ein drittes Befestigungsmittel 751a und ein viertes Befestigungs-mittel umfassen.

Das Gerät 100 kann eine erste Gehäusewand 141 und eine zweite Gehäusewand 142 umfassen. Von der ersten Gehäusewand 141 kann eine erste Nut 110a gebildet sein und von der zweiten Gehäusewand 142 kann eine zweite Nut 110b gebildet sein. In der ersten Nut 110a kann ein erstes Befestigungselement 160a angeordnet sein und in der zweiten Nut 110b kann ein zweites Befestigungselement 160b angeordnet sein. Weiterhin kann in der ersten Nut 110a in drittes Befestigungselement angeordnet sein und in der zweiten Nut 110b kann ein viertes Befestigungselement angeordnet sein. Die erste Gehäusewand 141 kann der zweiten Gehäusewand 142 gegenüberliegen.

Das erste Befestigungsmittel 750a, beispielsweise eine Schraube, kann mit dem ersten Befestigungselement 160a verbunden sein. Das erste Befestigungsmittel 750a kann so mit dem ersten Befestigungselement 160a verbunden sein, dass eine feste Verbindung zwischen dem ersten Befestigungsmittel 750a und dem ersten Befestigungselement 160a besteht, insbesondere kann durch die Verbindung des ersten Befestigungsmittels 750a mit dem ersten Befestigungselement 160a eine Position oder Lage des ersten Befestigungselements 160a in der ersten Nut 110a (unverschiebbar) festgelegt sein. Das zweite Befestigungsmittel 750b, beispielsweise eine Schraube, kann mit dem zweiten Befestigungselement 160b verbunden sein. Das zweite Befestigungsmittel 750b kann so mit dem zweiten Befestigungselement 160b verbunden sein, dass eine feste Verbindung zwischen dem zweiten Befestigungsmittel 750b und dem zweiten Befestigungselement 160b besteht, insbesondere kann durch die Verbindung des zweiten Befestigungsmittels 750b mit dem zweiten Befestigungselement 160b eine Position oder Lage des zweiten Befestigungselements 160b in der zweiten Nut 110b (unverschiebbar) festgelegt sein.

Das dritte Befestigungsmittel 751a, beispielsweise eine Schraube, kann mit dem dritten Befestigungselement verbunden sein. Das dritte Befestigungsmittel 751a kann so mit dem dritten Befestigungselement verbunden sein, dass eine feste Verbindung zwischen dem dritten Befestigungsmittel 751a und dem dritten Befestigungselement besteht, insbesondere kann durch die Verbindung des dritten Befestigungsmittels 751a mit dem ersten Befestigungselement eine Position oder Lage des ersten Befestigungselements in der ersten Nut 110a (unverschiebbar) festgelegt sein. Das vierte Befestigungsmittel, beispielsweise eine Schraube, kann mit dem vierten Befestigungselement verbunden sein. Das vierte Befestigungsmittel kann so mit dem vierten Befestigungselement verbunden sein, dass eine feste Verbindung zwischen dem vierten Befestigungsmittel und dem vierten Befestigungselement besteht, insbesondere kann durch die Verbindung des vierten Befestigungsmittels mit dem vierten Befestigungselement eine Position oder Lage des vierten Befestigungselements in der zweiten Nut 110b (unverschiebbar) festgelegt sein.

Die erste Halterung 700a kann eine erste Ausnehmung 720a umfassen, beispielsweise ein Loch, ein Durchgangsloch, eine Durchgangsbohrung und/oder einen Schlitz. Die erste Halterung 700a kann eine zweite Ausnehmung 720b umfassen, beispielsweise ein Loch, ein Durchgangsloch, eine Durchgangsbohrung und/oder einen Schlitz. Die erste Ausnehmung 720a und/oder die zweite Ausnehmung 720b kann sich vollständig durch einen jeweiligen Abschnitt der erste Halterung 700a erstrecken. Die erste Ausnehmung 720a und/oder die zweite Ausnehmung 720b kann randseitig vollständig von einem jeweiligen Abschnitt der erste Halterung 700a umgeben sein. Alternativ kann die erste Ausnehmung 720a und/oder die zweite Ausnehmung 720b jeweils randseitig auf einer Seite, insbesondere auf genau einer Seite, geöffnet sein. Dadurch kann das Gerät 100 auf die erste Halterung 700a geschoben oder gesteckt werden. Insbesondere kann dadurch ein oder zwei Befestigungsmittel des Geräts 100 auf die erste Halterung 700a geschoben oder gesteckt werden. Die erste Halterung 700a kann einen ersten Schlitz und ein erstes Loch aufweisen. Zusätzlich kann die erste Halterung 700a einen zweiten Schlitz und ein zweites Loch aufweisen. Der Durchmesser oder die Breite eines Lochs kann größer sein als die Breite eines Schlitzes. Ein Schlitz und ein Loch können (direkt) ineinander übergehen.

Die zweite Halterung 700b kann eine erste Ausnehmung 721a umfassen, beispielsweise ein Loch, ein Durchgangsloch, eine Durchgangsbohrung und/oder einen Schlitz. Die zweite Halterung 700b kann eine zweite Ausnehmung umfassen, beispielsweise ein Loch, ein Durchgangsloch, eine Durchgangsbohrung und/oder einen Schlitz. Die erste Ausnehmung 721a und/oder die zweite Ausnehmung kann sich vollständig durch einen jeweiligen Abschnitt der zweite Halterung 700b erstrecken. Die erste Ausnehmung 721a und/oder die zweite Ausnehmung kann randseitig vollständig von einem jeweiligen Abschnitt der zweite Halterung 700b umgeben sein. Alternativ kann die erste Ausnehmung 721a und/oder die zweite Ausnehmung 721b jeweils randseitig auf einer Seite, insbesondere auf genau einer Seite, geöffnet sein. Dadurch kann das Gerät 100 auf die zweite Halterung 700b geschoben oder gesteckt werden. Insbesondere kann dadurch ein oder zwei Befestigungsmittel des Geräts 100 auf die zweite Halterung 700b geschoben oder gesteckt werden. Die zweite Halterung 700b kann einen ersten Schlitz und ein erstes Loch aufweisen. Zusätzlich kann die zweite Halterung 700b einen zweiten Schlitz und ein zweites Loch aufweisen. Der Durchmesser oder die Breite eines Lochs kann größer sein als die Breite eines Schlitzes. Ein Schlitz und ein Loch können (direkt) ineinander übergehen.

Das erste Befestigungsmittel 750a kann durch die erste Ausnehmung 720a der ersten Halterung 700a geführt sein oder durch die erste Ausnehmung 720a hindurchgreifen. Das erste Befestigungsmittel 750a kann mit dem ersten Befestigungselement 160a verbunden sein. Dadurch kann die Halterung 600 mit dem Gerät 100 verbunden sein.

Das zweite Befestigungsmittel 750b kann durch die zweite Ausnehmung 720b der ersten Halterung 700a geführt sein oder durch die zweite Ausnehmung 720b hindurchgreifen. Das zweite Befestigungsmittel 750b kann mit dem zweiten Befestigungselement 160b verbunden sein.

Das dritte Befestigungsmittel 751a kann durch die erste Ausnehmung 721a der zweiten Halterung 700b geführt sein oder durch die erste Ausnehmung 721a hindurchgreifen. Das dritte Befestigungsmittel 751a kann mit dem dritten Befestigungselement verbunden sein.

Das vierte Befestigungsmittel kann durch die zweite Ausnehmung der zweiten Halterung 700b geführt sein oder durch die zweite Ausnehmung hindurchgreifen. Das vierte Befestigungsmittel kann mit dem vierten Befestigungselement verbunden sein.

Ein Abschnitt der ersten Halterung 700a kann die erste Gehäusewand 141 überlagern oder bedecken. Ein Abschnitt der ersten Halterung 700a kann die zweite Gehäusewand 142 überlagern oder bedecken. Ein Abschnitt der ersten Halterung 700a kann die dritte Gehäusewand 143 überlagern oder bedecken. Ein weitere Abschnitt der ersten Halterung 700a kann über das Gerät 100 (in Richtung der Achse des Geräts 100) hinausragen.

Ein Abschnitt der zweiten Halterung 700b kann die erste Gehäusewand 141 überlagern oder bedecken. Ein Abschnitt der zweiten Halterung 700b kann die zweite Gehäusewand 142 überlagern oder bedecken. Ein Abschnitt der zweiten Halterung 700b kann die dritte Gehäusewand 143 überlagern oder bedecken. Ein weitere Abschnitt der zweiten Halterung 700b kann über das Gerät 100 (in Richtung der Achse des Geräts 100) hinausragen.

Der Abschnitt der ersten Halterung 700a, der über das Gerät 100 hinausragen kann, und der Abschnitt der zweiten Halterung 700b, der über das Gerät 100 hinausragen kann, können in unterschiedliche Richtungen, insbesondere in entgegengesetzte Richtungen über das Gerät 100 hinausragen.

Die erste Halterung 700a kann ein erstes Halteelement 730a umfassen. Das erste Halteelement 730a kann mit dem Abschnitt der ersten Halterung 700a verbunden sein oder dort angeordnet sein, der über das Gerät 100 hinausragen kann. Das erste Halteelement 730a kann ein Magnet, insbesondere ein Permanentmagnet, eine Schienenklammer, insbesondere eine Hutschienenklammer, eine Schraube, ein Bolzen, ein Rastelement, ein Klemmelement, ein Klettelement und/oder ein Klebeelement sein. Bevorzugt ist das erste Halteelement 730a eine Schraube. Das erste Halteelement 730a kann durch eine Ausnehmung in dem Abschnitt der ersten Halterung 700a, der über das Gerät 100 hinausragen kann, geführt sein oder durch die Ausnehmung hindurchgreifen.

Die zweite Halterung 700b kann ein zweites Halteelement 730b umfassen. Das zweite Halteelement 730b kann mit dem Abschnitt der zweiten Halterung 700b verbunden sein oder dort angeordnet sein, der über das Gerät 100 hinausragen kann. Das zweite Halteelement 730b kann ein Magnet, insbesondere ein Permanentmagnet, eine Schienenklammer, insbesondere eine Hutschienenklammer, eine Schraube, ein Bolzen, ein Rastelement, ein Klemmelement, ein Klettelement und/oder ein Klebeelement sein. Bevorzugt ist das zweite Halteelement 730b eine Schraube. Das zweite Halteelement 730b kann durch eine Ausnehmung in dem Abschnitt der zweiten Halterung 700b, der über das Gerät 100 hinausragen kann, geführt sein oder durch die Ausnehmung hindurchgreifen.

Durch das erste Halteelement 730a und/oder durch das zweite Halteelement 730b kann das Gerät 100 mit einer Außenbereichsvorrichtung 800 verbunden sein. Dabei kann das erste Halteelement 730a und/oder das zweite Halteelement 730b mit einer Montagehalterung 820 der Außenbereichsvorrichtung 800 verbunden sein.

Begriffe wie "erstes", "zweites", "drittes" und "viertes" unterstützen die Unterscheidung von Elementen, beispielsweise von unterschiedlichen Kühlrippen, und sind nicht einschränkend zu verstehen. Beispielsweise sind die Begriffe nicht so zu verstehen, dass mindestens vier Elemente vorhanden sein müssen, wenn ein "viertes" Element angesprochen wird.

## Patentansprüche

1. System (1000), umfassend ein Gerät (100), eine Halterung (200, 300, 400, 500, 600, 700), zumindest ein erstes Befestigungselement (160a, 160b) und zumindest ein erstes Befestigungsmittel (250a, 250b; 350a, 350b; ...), wobei:
(a) das Gerät (100) mehrere Kühlrippen (134a, 136a, ...) umfasst, wobei zumindest eine erste Nut (110a, 110b) zwischen zwei der Kühlrippen (134a, 136a, ...) ausgebildet ist, und das erste Befestigungselement (160a, 160b) in der ersten Nut (110a, 110b) angeordnet ist; und
(b) das erste Befestigungsmittel (250a, 250b; 350a, 350b; ...) so mit dem ersten Befestigungselement (160a, 160b) zusammenwirkt, dass die Halterung (200, 300, 400, 500, 600, 700) mit dem Gerät (100) verbunden ist,
wobei die Halterung (200, 300, 400, 500, 600, 700) eine Aussparung (220a, 220b) aufweist,
wobei das Befestigungsmittel (250a, 250b) in der Aussparung (220a, 220b) gelagert ist, und
**dadurch gekennzeichnet, dass**
das Befestigungselement (160a, 160b) und die Nut (110a, 110b) so ausgebildet sind, dass das Befestigungselement (160a, 160b) in Längsrichtung der Nut (110a, 110b) verschiebbar ist.

2. System (1000) nach Anspruch 1, wobei das Gerät (100) ein Gehäuse (101) umfasst und das Gehäuse (101) eine erste Gehäusewand (141) aufweist, wobei die zwei der Kühlrippen (134a, 136a, ...) von der ersten Gehäusewand (141) ausgebildet sind.

3. System (1000) nach Anspruch 2, wobei das Gehäuse (101) des Geräts (100) einen ersten Gehäusedeckel (145) und einen zweiten Gehäusedeckel (146) umfasst, und wobei der erste Gehäusedeckel (145) einen ersten Anschluss (145a) und der zweite Gehäusedeckel (146) einen zweiten Anschluss (146a) umfasst.

4. System (1000) nach einem der vorhergehenden Ansprüche, umfassend zumindest ein zweites Befestigungselement (160a, 160b) und zumindest ein zweites Befestigungsmittel (250a, 250b; 350a, 350b; ...), wobei das erste Befestigungsmittel (250a, 250b; 350a, 350b; ...) so mit dem ersten Befestigungselement (160a, 160b) zusammenwirkt und das zweite Befestigungsmittel (250a, 250b; 350a, 350b; ...) so mit dem zweiten Befestigungselement (160a, 160b) zusammenwirkt, dass die Halterung (200, 300, 400, 500, 600, 700) mit dem Gerät (100) verbunden ist.

5. System (1000) nach Anspruch 4, wobei das Gerät (100) zumindest eine zweite Nut (110a, 110b) aufweist und das zweite Befestigungselement (160a, 160b) in der zweiten Nut (110a, 110b) angeordnet ist, insbesondere wobei die zweite Nut (110a, 110b) zwischen zwei Kühlrippen (134a, 136a, ...) ausgebildet ist.

6. System (1000) nach Anspruch 5, wobei die erste Nut (110a, 110b) und die zweite Nut (110a, 110b) von unterschiedlichen Gehäusewänden (141, 142) ausgebildet sind.

7. System (1000) nach Anspruch 4, wobei das erste Befestigungselement (160a, 160b) und das zweite Befestigungselement (160a, 160b) in der ersten Nut (110a, 110b) angeordnet sind.

8. System (1000) nach Ansprüchen 1 bis 7, wobei die Halterung (700) eine erste Halterung (700a) und eine zweite Halterung (700b) umfasst, insbesondere wobei das erste Befestigungsmittel (750a) so mit dem ersten Befestigungselement (160a, 160b) zusammenwirkt, dass die erste Halterung (700a) mit dem Gerät (100) verbunden ist, und das zweite Befestigungsmittel (751a) so mit dem zweiten Befestigungselement (160a, 160b) zusammenwirkt, dass die zweite Halterung (700b) mit dem Gerät (100) verbunden ist.

9. System (1000) nach einem der vorhergehenden Ansprüche, wobei die Halterung (200, 300, 400, 500, 600, 700) zumindest ein Halteelement (330a, 430a, 530a, 630a, 730a) zum Verbinden der Halterung (200, 300, 400, 500, 600, 700) mit einer Außenbereichsvorrichtung (800) umfasst.

10. System (1000) nach Anspruch 9, wobei das Halteelement (330a, 430a, 530a, 630a, 730a) ein Magnet, insbesondere ein Permanentmagnet, eine Schienenklammer, insbesondere eine Hutschienenklammer, eine Schraube, ein Bolzen, ein Rastelement, ein Klemmelement, ein Klettelement und/oder ein Klebeelement ist.

11. System (1000) nach einem der vorhergehenden Ansprüche, wobei die Halterung (200, 300, 400, 500, 600, 700) eine erste Aussparung (220a, 220b) und eine zweite Aussparung (220a, 220b) aufweist, und wobei ein erstes Befestigungsmittel (250a, 250b) in der ersten Aussparung (220a, 220b) gelagert ist und ein zweites Befestigungsmittel (250a, 250b) in der zweiten Aussparung (220a, 220b) gelagert ist.

12. System (1000) nach einem der Ansprüche 1 bis 10, wobei die Halterung (400) einen ersten Abschnitt (410a) und einen zweiten Abschnitt (420a) umfasst, wobei sich der erste Abschnitt (410a) im Wesentlichen parallel zu einer Seite des Geräts, insbesondere zu einer ersten Gehäusewand (141) eines Gehäuses (101) des Geräts (100) erstreckt, und der zweite Abschnitt (420a) relativ zu dem ersten Abschnitt (410a) abgewinkelt ist und sich von dem Gerät (100) wegweisend erstreckt.

13. System (1000) nach einem der Ansprüche 3 bis 12, wobei eine Achse des Geräts (100) zwischen dem ersten Gehäusedeckel (145) und dem zweiten Gehäusedeckel (146) orientiert ist, und wobei sich die Halterung (200, 300, 400, 500, 600, 700) über den ersten Gehäusedeckel (145) und/oder den zweiten Gehäusedeckel (146) in Richtung der Achse des Geräts (100) hinaus erstreckt.

14. System (1000) nach Anspruch 13, wobei die Halterung (600) einen ersten Abschnitt (610a), einen zweiten Abschnitt (611a) und einen dritten Abschnitt (612a) umfasst, wobei sich der erste Abschnitt (610a) im Wesentlichen parallel zur Achse des Geräts (100) erstreckt, der zweite Abschnitt (611a) gegenüber dem ersten Abschnitt (610a) abgewinkelt ist und sich der dritte Abschnitt (612a) im Wesentlichen parallel zur Achse des Geräts (100) erstreckt.

15. System (1000) nach einem der vorhergehenden Ansprüche, umfassend eine Außenbereichsvorrichtung (800), wobei die Halterung (200, 300, 400, 500, 600, 700) mit der Außenbereichsvorrichtung (800) verbunden ist.

## Claims

1. A system (1000) comprising a device (100), a mount (200, 300, 400, 500, 600, 700), at least one first fastening element (160a, 160b) and at least one first fastening means (250a, 250b; 350a, 350b; ...), wherein:
(a) the device (100) comprises a plurality of cooling fins (134a, 136a, ...), wherein at least one first groove (110a, 110b) is formed between two of the cooling fins (134a, 136a, ...), and the first fastening element (160a, 160b) is arranged in the first groove (110a, 110b); and
(b) the first fastening means (250a, 250b; 350a, 350b; ...) interacts with the first fastening element (160a, 160b) such that the mount (200, 300, 400, 500, 600, 700) is connected to the device (100),
wherein the mount (200, 300, 400, 500, 600, 700) has a recess (220a, 220b),
wherein the fastening means (250a, 250b) is mounted in the recess (220a, 220b), and
**characterized in that**
the fastening element (160a, 160b) and the groove (110a, 110b) are formed such that the fastening element (160a, 160b) is displaceable in the longitudinal direction of the groove (110a, 110b).

2. The system (1000) according to claim 1, wherein the device (100) comprises a housing (101) and the housing (101) has a first housing wall (141), wherein the two of the cooling fins (134a, 136a, ...) are formed by the first housing wall (141).

3. The system (1000) according to claim 2, wherein the housing (101) of the device (100) comprises a first housing cover (145) and a second housing cover (146), and wherein the first housing cover (145) comprises a first connection (145a) and the second housing cover (146) comprises a second connection (146a).

4. The system (1000) according to any one of the preceding claims, comprising at least one second fastening element (160a, 160b) and at least one second fastening means (250a, 250b; 350a, 350b; ...), wherein the first fastening means (250a, 250b; 350a, 350b; ...) cooperates with the first fastening element (160a, 160b) and the second fastening means (250a, 250b; 350a, 350b; ...) cooperates with the second fastening element (160a, 160b) such that the mount (200, 300, 400, 500, 600, 700) is connected to the device (100).

5. The system (1000) according to claim 4, wherein the device (100) has at least one second groove (110a, 110b) and the second fastening element (160a, 160b) is arranged in the second groove (110a, 110b), in particular wherein the second groove (110a, 110b) is formed between two cooling fins (134a, 136a, ...).

6. The system (1000) according to claim 5, wherein the first groove (110a, 110b) and the second groove (110a, 110b) are formed by different housing walls (141, 142).

7. The system (1000) according to claim 4, wherein the first fastening element (160a, 160b) and the second fastening element (160a, 160b) are arranged in the first groove (110a, 110b).

8. The system (1000) according to claims 1 to 7, wherein the mount (700) comprises a first mount (700a) and a second mount (700b), in particular wherein the first fastening means (750a) cooperates with the first fastening element (160a, 160b) such that the first mount (700a) is connected to the device (100), and the second fastening means (751a) cooperates with the second fastening element (160a, 160b) such that the second mount (700b) is connected to the device (100).

9. The system (1000) according to any one of the preceding claims, wherein the mount (200, 300, 400, 500, 600, 700) comprises at least one holding element (330a, 430a, 530a, 630a, 730a) for connecting the mount (200, 300, 400, 500, 600, 700) to an outdoor device (800).

10. The system (1000) according to claim 9, wherein the holding element (330a, 430a, 530a, 630a, 730a) is a magnet, in particular a permanent magnet, a rail clip, in particular a top hat rail clip, a screw, a bolt, a latching element, a clamping element, a hook-and-loop element and/or an adhesive element.

11. The system (1000) according to any one of the preceding claims, wherein the mount (200, 300, 400, 500, 600, 700) has a first recess (220a, 220b) and a second recess (220a, 220b), and wherein a first fastening means (250a, 250b) is mounted in the first recess (220a, 220b) and a second fastening means (250a, 250b) is mounted in the second recess (220a, 220b).

12. The system (1000) according to any one of claims 1 to 10, wherein the mount (400) comprises a first portion (410a) and a second portion (420a), wherein the first portion (410a) extends substantially parallel to a side of the device, in particular to a first housing wall (141) of a housing (101) of the device (100), and the second portion (420a) is angled relative to the first portion (410a) and extends facing away from the device (100).

13. The system (1000) according to any one of claims 3 to 12, wherein an axis of the device (100) is oriented between the first housing cover (145) and the second housing cover (146), and wherein the mount (200, 300, 400, 500, 600, 700) extends beyond the first housing cover (145) and/or the second housing cover (146) in the direction of the axis of the device (100).

14. The system (1000) according to claim 13, wherein the mount (600) comprises a first portion (610a), a second portion (611a) and a third portion (612a), wherein the first portion (610a) extends substantially parallel to the axis of the device (100), the second portion (611a) is angled relative to the first portion (610a) and the third portion (612a) extends substantially parallel to the axis of the device (100).

15. The system (1000) according to any one of the preceding claims, comprising an outdoor device (800), wherein the mount (200, 300, 400, 500, 600, 700) is connected to the outdoor device (800).

## Revendications

1. Système (1000), comprenant un appareil (100), un support (200, 300, 400, 500, 600, 700), au moins un premier élément de fixation (160a, 160b) et au moins des premiers moyens de fixation (250a, 250b ; 350a, 350b ; ...), dans lequel :
(a) l'appareil (100) comprend plusieurs ailettes de refroidissement (134a, 136a, ...), dans lequel au moins une première rainure (110a, 110b) est formée entre deux des ailettes de refroidissement (134a, 136a, ...) et le premier élément de fixation (160a, 160b) est agencé dans la première rainure (110a, 110b) ; et
(b) les premiers moyens de fixation (250a, 250b ; 350a, 350b ; ...) coopèrent avec le premier élément de fixation (160a, 160b) de sorte que le support (200, 300, 400, 500, 600, 700) est assemblé avec l'appareil (100),
dans lequel le support (200, 300, 400, 500, 600, 700) comporte un évidement (220a, 220b),
dans lequel les moyens de fixation (250a, 250b) sont montés dans l'évidement (220a, 220b), et
**caractérisé en ce que**
l'élément de fixation (160a, 160b) et la rainure (110a, 110b) sont formés de sorte que l'élément de fixation (160a, 160b) peut être déplacé dans une direction longitudinale de la rainure (110a, 110b).

2. Système (1000) selon la revendication 1, dans lequel l'appareil (100) comprend un boîtier (101) et le boîtier (101) comporte une première paroi de boîtier (141), dans lequel les deux ailettes parmi les ailettes de refroidissement (134a, 136a, ...) sont formées à partir de la première paroi de boîtier (141).

3. Système (1000) selon la revendication 2, dans lequel le boîtier (101) de l'appareil (100) comprend un premier couvercle de boîtier (145) et un second couvercle de boîtier (146), et dans lequel le premier couvercle de boîtier (145) comprend un premier raccordement (145a) et le second couvercle de boîtier (146) comprend un second raccordement (146a).

4. Système (1000) selon l'une des revendications précédentes, comprenant au moins un second élément de fixation (160a, 160b) et au moins des seconds moyens de fixation (250a, 250b ; 350a, 350b ; ...), dans lequel les premiers moyens de fixation (250a, 250b ; 350a, 350b ; ...) coopèrent avec le premier élément de fixation (160a, 160b) et les seconds moyens de fixation (250a, 250b ; 350a, 350b ; ...) coopèrent avec le second élément de fixation (160a, 160b) de sorte que le support (200, 300, 400, 500, 600, 700) est assemblé avec l'appareil (100).

5. Système (1000) selon la revendication 4, dans lequel l'appareil (100) comporte au moins une seconde rainure (110a, 110b) et le second élément de fixation (160a, 160b) est agencé dans la seconde rainure (110a, 110b), en particulier dans lequel la seconde rainure (110a, 110b) est formée entre deux ailettes de refroidissement (134a, 136a, ...).

6. Système (1000) selon la revendication 5, dans lequel la première rainure (110a, 110b) et la seconde rainure (110a, 110b) sont formées à partir de différentes parois de boîtier (141, 142).

7. Système (1000) selon la revendication 4, dans lequel le premier élément de fixation (160a, 160b) et le second élément de fixation (160a, 160b) sont agencés dans la première rainure (110a, 110b).

8. Système (1000) selon les revendications 1 à 7, dans lequel le support (700) comprend un premier support (700a) et un second support (700b), en particulier dans lequel le premier moyen de fixation (750a) coopère avec le premier élément de fixation (160a, 160b) de sorte que le premier support (700a) est assemblé avec l'appareil (100), et le second moyen de fixation (751a) coopère avec le second élément de fixation (160a, 160b) de sorte que le second support (700b) est assemblé avec l'appareil (100).

9. Système (1000) selon l'une des revendications précédentes, dans lequel le support (200, 300, 400, 500, 600, 700) comprend au moins un élément de retenue (330a, 430a, 530a, 630a, 730a) pour assembler le support (200, 300, 400, 500, 600, 700) avec un dispositif d'espace extérieur (800).

10. Système (1000) selon la revendication 9, dans lequel l'élément de retenue (330a, 430a, 530a, 630a, 730a) est un aimant, en particulier un aimant permanent, un clip pour rail, en particulier un clip pour rail profilé, une vis, un boulon, un élément d'enclenchement, un élément de serrage, un élément auto-agrippant et/ou un élément adhésif.

11. Système (1000) selon l'une des revendications précédentes, dans lequel le support (200, 300, 400, 500, 600, 700) comporte un premier évidement (220a, 220b) et un second évidement (220a, 220b), et dans lequel des premiers moyens de fixation (250a, 250b) sont montés dans le premier évidement (220a, 220b) et des seconds moyens de fixation (220a, 220b) sont montés dans le second évidement (220a, 220b).

12. Système (1000) selon l'une des revendications 1 à 10, dans lequel le support (400) comprend une première partie (410a) et une seconde partie (420a), dans lequel la première partie (410a) s'étend de manière sensiblement parallèle à un côté de l'appareil, en particulier à une première paroi de boîtier (141) d'un boîtier (101) de l'appareil (100), et la seconde partie (420a) est coudée par rapport à la première partie (410a) et s'étend en s'éloignant de l'appareil (100).

13. Système (1000) selon l'une des revendications 3 à 12, dans lequel un axe de l'appareil (100) est orienté entre le premier couvercle de boîtier (145) et le second couvercle de boîtier (146), et dans lequel le support (200, 300, 400, 500, 600, 700) s'étend au-delà du premier couvercle de boîtier (145) et/ou du second couvercle de boîtier (146) en direction de l'axe de l'appareil (100).

14. Système (1000) selon la revendication 13, dans lequel le support (600) comprend une première partie (610a), une deuxième partie (611a) et une troisième partie (612a), dans lequel la première partie (610a) s'étend de manière sensiblement parallèle à l'axe de l'appareil (100), la deuxième partie (611a) est coudée par rapport à la première partie (610a) et la troisième partie (612a) s'étend de manière sensiblement parallèle à l'axe de l'appareil (100).

15. Système (1000) selon l'une des revendications précédentes, comprenant un dispositif d'espace extérieur (800), dans lequel le support (200, 300, 400, 500, 600, 700) est assemblé avec le dispositif d'espace extérieur (800).
